# EUROPÄISCHE PATENTSCHRIFT

(11) **EP 2 440 458 B1**
(45) Veröffentlichungstag und Bekanntmachung des Hinweises auf die Patenterteilung: **21.08.2013**
(21) Anmeldenummer: 10725031.8
(22) Anmeldetag: 08.06.2010
(51) Int. Cl.: B64D 11/04

(54) **SCHNITTSTELLENSYSTEM ZUR VERWENDUNG IN EINER FLUGZEUGBORDKÜCHE UND VERFAHREN**
INTERFACE SYSTEM FOR USE IN AN AIRCRAFT GALLEY AND METHOD
SYSTEME D'INTERFACE DESTINE A ETRE UTILISE DANS UNE CUISINE A BORD D'UN AVION ET PROCEDE

(30) Priorität: 08.06.2009 DE 102009024210; 08.06.2009 US 184941 P
(43) Veröffentlichungstag der Anmeldung: 18.04.2012
(73) Patentinhaber: Airbus Operations GmbH, 21129 Hamburg (DE)
(72) Erfinder: KOSCHBERG, Stefan, 18211 Ostseebad Nienhagen (DE); MUNDT, Marco, 16909 Heiligengrabe (DE); EGGERS, Detlef, 18059 Papendorf (DE)
(74) Vertreter: Schicker, Silvia
(86) Internationale Anmeldenummer: PCT/EP2010/003432
(87) Internationale Veröffentlichungsnummer: WO 2010/142420

(56) Entgegenhaltungen:
- EP-B1- 1 551 709
- WO-A1-2007/096000
- WO-A1-2008/067428
- DE-A1-102006 023 047

## Beschreibung

Die vorliegende Erfindung betrifft ein zur Verwendung in einer Flugzeugbordküche vorgesehenes Schnittstellensystem, ein ein derartiges Schnittstellensystem umfassendes und zur Aufnahme in einer Flugzeugbordküche vorgesehenes Gerätemodul, sowie ein Verfahren zur Montage von Bordküchengeräten in einer Flugzeugbordküche.

Aus der WO 2007/096000 A1 ist eine modular aufgebaute Flugzeugbordküche bekannt, die einen Grundkörper mit einer Mehrzahl von Fächern umfasst. In den Fächern des Grundkörpers sind verschiedene Geräte, wie z.B. Öfen, Mikrowellengeräte, Wassererhitzer und Getränkezubereiter angeordnet. Ferner sind in den Fächern des Grundkörpers mehrere hintereinander angeordnete Boxen aufgenommen, in denen zur Versorgung der Passagiere an Bord des Flugzeugs benötigte Serviceprodukte, wie z.B. Nahrungsmittel oder Getränke untergebracht werden können.

Die DE 10 2006 023 047 A1, welche als der nächstliegende, bekannte Stand der Technik betrachtet wird, offenbart eine modulare Flugzeugbordküche mit in Fächern der Bordküche vorgesehenen Schnittstellenelementen zum Anschluss von Bordküchengeräten an ein elektrisches Versorgungsnetz sowie ein Wasserversorgungsnetz der Bordküche.

Der Erfindung liegt die Aufgabe zugrunde, ein Schnittstellensystem, gemäβ Anspruch 1, bereitzustellen, das es ermöglicht, Bordküchengeräte einfach, platzsparend und flexibel in einem Fach einer Flugzeugbordküche zu installieren. Ferner liegt der Erfindung die Aufgabe zugrunde, ein ein derartiges Schnittstellensystem umfassendes und zur Aufnahme in einer Flugzeugbordküche vorgesehenes Gerätemodul anzugeben, Außerdem liegt der Erfindung die Aufgabe zugrunde, ein Verfahren, gemäβ Anspruch 14, zur Montag von Borbküchengeräten in einer Flugzeugbordküche anzugeben.

Ein erfindungsgemäßes Schnittstellensystem zur Verwendung in einer Flugzeugbordküche umfasst ein erstes Anschlusselement, das über eine erste Geräteanschlusseinrichtung mit einem internen elektrischen System, einem internen Frischwasserversorgungssystem und/oder einem internen Abwasserentsorgungssystem eines ersten Bordküchengeräts verbindbar ist und über eine zweite Geräteanschlusseinrichtung mit einem internen elektrischen System, einem internen Frischwasserversorgungssystem und/oder einem internen Abwasserversorgungssystem eines zweiten Bordküchengeräts verbindbar ist. Das erste Anschlusselement ist ferner über eine Flugzeugbordküchenanschlusseinrichtung mit einer komplementären Flugzeugbordküchenanschlusseinrichtung eines in einem Fach einer Flugzeugbordküche befestigbaren zweiten Anschlusselements verbindbar, um das erste Anschlusselement über das zweite Anschlusselement mit einem elektrischen System, einem Frischwasserversorgungssystem und/oder einem Abwasserentsorgungssystem der Flugzeugbordküche zu verbinden. Das erste Anschlusselement umfasst außerdem ein Verteilersystem, das die Flugzeugbordküchenanschlusseinrichtung des ersten Anschlusselements mit der ersten und der zweiten Geräteanschlusseinrichtung des ersten Anschlusselements verbindet.

Das erfindungsgemäße Schnittstellensystem ermöglicht es, über das erste Anschlusselement auf einfache Weise eine Verbindung zwischen dem internen elektrischen System, dem internen Frischwasserversorgungssystem und/oder dem internen Abwasserentsorgungssystem des ersten Bordküchengeräts und dem elektrischen System, dem Frischwasserversorgungssystem und/oder dem Abwasserentsorgungssystem der Flugzeugbordküche sowie eine Verbindung zwischen dem internen elektrischen System, dem internen Frischwasserversorgungssystem und/oder dem internen Abwasserentsorgungssystem des zweiten Bordküchengeräts und dem elektrischen System, dem Frischwasserversorgungssystem und/oder dem Abwasserentsorgungssystem der Flugzeugbordküche herzustellen. Mit anderen Worten, das erfindungsgemäße Schnittstellensystem stellt sicher, dass die internen Systeme einer Mehrzahl von Bordküchengeräten auf einfache Weise mit den entsprechenden Systemen der Flugzeugbordküche verbunden werden können.

Grundsätzlich können mittels des erfindungsgemäßen Schnittstellensystems mindestens zwei Bordküchengeräte an ein elektrisches System, ein Frischwasserversorgungssystem und/oder ein Abwasserentsorgungssystem der Flugzeugbordküche angeschlossen werden, wobei die Bordküchengeräte, je nach Bedarf, jeweils an alle drei Flugzeugbordküchensysteme oder nur an ein oder zwei Flugzeugbordküchensystem(e) angeschlossen werden können. Beispielsweise kann auf den Anschluss eines Bordküchengeräts an ein Frischwasserversorgungssystem und/oder ein Abwasserentsorgungssystem der Flugzeugbordküche verzichtet werden, wenn das Bordküchengerät im Betrieb kein Wasser verbraucht und/oder kein Abwasser erzeugt und daher kein internes Fischwasserversorgungssystem und/oder kein internes Abwasserentsorgungssystem umfasst. Ferner kann das erfindungsgemäße Schnittstellensystem auch dazu eingerichtet sein, mehr als zwei Bordküchengeräte an ein elektrisches System, ein Frischwasserversorgungssystem und/oder ein Abwasserentsorgungssystem der Flugzeugbordküche anzuschließen. Hierzu muss das Schnittstellensystem lediglich eine entsprechende Anzahl von Geräteanschlusseinrichtungen und ein entsprechend gestaltetes Verteilersystem aufweisen.

Das erfindungsgemäße Schnittstellensystem bietet die Möglichkeit, zwei oder mehr Bordküchengeräte über ein einziges in dem Fach der Flugzeugbordküche angeordnetes zweites Anschlusselement mit dem elektrischen System, dem Frischwasserversorgungssystem und/oder dem Abwasserentsorgungssystem der Flugzeugbordküche zu verbinden. Daher kann das erfindungsgemäße Schnittstellensystem besonders vorteilhaft in bereits bestehenden Flugzeugbordküchen eingesetzt werden, in denen das zweites Anschlusselement ursprünglich für die Versorgung von lediglich einem einzigen Bordküchengerät vorgesehenen war oder in denen pro Fach nur ein zweites Anschlusselement vorgesehen ist, es jedoch erforderlich oder erwünscht ist, ohne Installation weiterer zweiter Anschlusselemente mehr als ein Bordküchengerät mit dem elektrischen System, dem Frischwasserversorgungssystem und/oder dem Abwasserentsorgungssystem der Flugzeugbordküche zu verbinden. Dadurch kann der in einer Flugzeugbordküche zur Aufnahme von Bordküchengeräten zur Verfügung stehende Raum besonders gut und vielseitig genutzt werden.

Die Bordküchengeräte können beispielsweise als Ofen, als Mikrowellengerät, als Toaster, als Wassererhitzer, als Babynahrungszubereiter, als Heißgetränkezubereiter, als Wassertank, als Wasserspender, als Stauraumbehälter oder dergleichen ausgebildet sein. Der Verwendungszweck des ersten Bordküchengeräts kann der gleiche sein wie der des zweiten Bordküchengeräts oder sich von letzterem unterscheiden. Zum Beispiel kann das Schnittstellensystem dazu eingerichtet sein, eine Bordküchengerätekombination aus einem Mikrowellengerät und einem Heißgetränkezubereiter mit der Flugzeugbordküche zu verbinden.

Das zweite Anschlusselement des erfindungsgemäßen Schnittstellensystems ist vorzugsweise in einer derartigen Position in dem Fach der Flugzeugbordküche befestigbar und das erste Anschlusselements ist vorzugsweise in einer derartigen Position mit den Bordküchengeräten verbindbar, dass bei der Montage der mit dem ersten Anschlusselement verbundenen Bordküchengeräte in dem Fach der Flugzeugbordküche das erste Anschlusselement im Wesentlichen automatisch mit dem zweiten Anschlusselement zusammenwirkt. Mit anderen Worten, durch das erfindungsgemäße Schnittstellensystem kann ein Plug-and-Play-System geschaffen werden, das eine besonders einfache Montage und Inbetriebnahme der Flugzeugbordküchengeräte ermöglicht.

Ferner können mit Hilfe des erfindungsgemäßen Schnittstellensystems mehrere Bordküchengeräte in einem Arbeitsschritt in der Flugzeugbordküche montiert werden, wobei Montagearbeiten zum Anschließen der internen elektrischen Systeme, der internen Frischwasserversorgungssysteme und/oder der internen Abwasserentsorgungssysteme der Bordküchengeräte an das erste Anschlusselement auf komfortable Art und Weise außerhalb der Flugzeugbordküche durchgeführt werden können. Schließlich ermöglicht das erfindungsgemäße Schnittstellensystem eine Entkopplung der bordküchengeräteinternen elektrischen Anschlüsse, Frischwasserversorgungs- und/oder Abwasserentsorgungsanschlüsse von den entsprechenden Anschlüssen der Flugzeugbordküche, so dass die Bordküchengeräte besonders flexibel an verschiedenen Positionen in der Flugzeugbordküche montiert werden können.

Das Verteilersystem des ersten Anschlusselements kann beispielsweise einen Stromverteiler, einen Frischwasserverteiler und/oder einen Abwasserverteiler umfassen. Vorzugsweise verbindet der Stromverteiler des ersten Anschlusselements einen elektrischen Anschluss der Flugzeugbordküchenanschlusseinrichtung des ersten Anschlusselements mit einem elektrischen Anschluss der ersten Geräteanschlusseinrichtung des ersten Anschlusselements und mit einem elektrischen Anschluss der zweiten Geräteanschlusseinrichtung des ersten Anschlusselements. Der Frischwasserverteiler des ersten Anschlusselements verbindet vorzugsweise einen Frischwasseranschluss der Flugzeugbordküchenanschlusseinrichtung des ersten Anschlusselements mit einem Frischwasseranschluss der ersten Geräteanschlusseinrichtung des ersten Anschlusselements und mit einem Frischwasseranschluss der zweiten Geräteanschlusseinrichtung des ersten Anschlusselements. Der Abwasserverteiler des ersten Anschlusselements verbindet vorzugsweise einen Abwasseranschluss der ersten Geräteanschlusseinrichtung des ersten Anschlusselements und einen Abwasseranschluss der zweiten Geräteanschlusseinrichtung des ersten Anschlusselements mit einem Abwasseranschluss der Flugzeugbordküchenanschlusseinrichtung des ersten Anschlusselements.

Das erste Anschlusselement und insbesondere das Verteilersystem des ersten Anschlusselements können verschieden gestaltet sein. In einer Ausführungsform umfasst das erste Anschlusselement ein Gehäuse, an dessen Seitenwänden die Flugzeugbordküchenanschlusseinrichtung sowie die Geräteanschlusseinrichtungen angeordnet sein können. Das Verteilersystem kann dann in das Gehäuse des ersten Anschlusselements integriert sein und die Flugzeugbordküchenanschlusseinrichtung direkt mit allen Geräteanschlusseinrichtungen des ersten Anschlusselements verbinden.

Alternativ dazu kann das erste Anschlusselement jedoch auch eine Flugzeugbordküchenanschlusseinrichtung umfassen, die mit lediglich einer Geräteanschlusseinrichtung oder mit lediglich einem Teil der Geräteanschlusseinrichtungen des ersten Anschlusselements direkt verbunden ist. Das Verteilersystem des ersten Anschlusselements ist dann vorzugsweise so gestaltet, dass es die direkt mit der Flugzeugbordküchenanschlusseinrichtung verbundene(n) Geräteanschlusseinrichtung(en) mit der/den nicht unmittelbar an die Flugzeugbordküchenanschlusseinrichtung angeschlossenen Geräteanschlusseinrichtung(en) des ersten Anschlusselements verbindet. Das Verteilersystem kann dann zumindest teilweise in ein Bordküchengerät integriert sein, das über eine entsprechende Geräteanschlusseinrichtung zum direkten Anschluss an die Flugzeugbordküchenanschlusseinrichtung des ersten Anschlusselements vorgesehen ist. Das erfindungsgemäße Schnittstellensystem kann somit besonders gut auf verschiedene räumliche Anordnungen und funktionale Kombinationen der Bordküchengeräte angepasst werden.

Der Stromverteiler des ersten Anschlusselements kann beispielsweise elektrische Leitungen, Kabel, Elektronikplatinen, Schaltkreise oder dergleichen umfassen. Vorzugsweise speist der Stromverteiler des ersten Anschlusselements die von dem elektrischen System der Flugzeugbordküche bezogene elektrische Energie entsprechend der von den Bordküchengeräten verbrauchten Energie separat in die Bordküchengeräte ein. Dabei kann das erste Anschlusselements dazu eingerichtet sein, sicherzustellen, dass ein vorgegebenes Maximum an von den Bordküchengeräten verbrauchter elektrischer Gesamtleistung nicht überschritten wird.

Der Frischwasserverteiler des ersten Anschlusselements kann beispielsweise Wasserleitungen in Form von Rohren oder Schläuchen, Flansche, Muffen, gebogene Rohrabschnitte, T-förmige Verteilerstücke, Y-förmige Verteilerstücke, Dichtungen, Kanäle, Ventile, Klappen, Durchflussregelventile, Rückschlagventile, Auslaufbruchsicherungskupplungen, Rohrkopplungen oder dergleichen umfassen. Vorzugsweise speist der Frischwasserverteiler das Frischwasser entsprechend der von den Bordküchengeräten verbrauchten Wassermenge separat in die Bordküchengeräte ein.

Ebenso kann der Abwasserverteiler des ersten Anschlusselements Wasserleitungen in Form von Rohren oder Schläuchen, Flansche, Muffen, gebogene Rohrabschnitte, T-förmige Verteilerstücke, Y-förmige Verteilerstücke, Dichtungen, Kanäle, Ventile, Klappen, Durchflussregelventile, Rückschlagventile, Auslaufbruchsicherungskupplungen oder Rohrkopplungen umfassen. Der Abwasserverteiler des ersten Anschlusselements bezieht von den Bordküchengeräten Abwasser und leitet das Abwasser in das Abwassersystem der Flugzeugbordküche ab. Der Abwasserverteiler kann beispielsweise auch derart ausgebildet sein, dass er die Abwasseranschlüsse der ersten und der zweiten Geräteanschlusseinrichtung des ersten Anschlusselements mit einem Abwasserspeicherbehälter zum Zwischenspeichern von Abwasser verbindet.

In einer bevorzugten Ausführung des erfindungsgemäßen Schnittstellensystems sind die Frischwasseranschlüsse der ersten und der zweiten Geräteanschlusseinrichtung des ersten Anschlusselements in einem ersten Abschnitt des ersten Anschlusselements angeordnet, während die Abwasseranschlüsse der ersten und der zweiten Geräteanschlusseinrichtung des ersten Anschlusselements in einem separat von dem ersten Abschnitt des ersten Anschlusselements ausgebildeten zweiten Abschnitt des ersten Anschlusselement angeordnet sind. Der erste und der zweite Abschnitt des ersten Anschlusselements sind dann in unterschiedlichen Positionen mit den Bordküchengeräten verbindbar. Dadurch wird es möglich, bei der Zuleitung von Frischwasser zu und/oder der Ableitung von Abwasser von den Bordküchengeräten die Schwerkraft zu nutzen. Beispielsweise kann der erste Abschnitt des ersten Anschlusselements zur Montage in einem oberen Abschnitt der Bordküchengeräte und der zweite Abschnitt des ersten Anschlusselements zur Montage in einem unteren Abschnitt der Bordküchengeräte vorgesehen sein.

Zusätzlich oder alternativ dazu ist es denkbar, die elektrischen Anschlüsse der ersten und der zweiten Geräteanschlusseinrichtung des ersten Anschlusselements in einem Abschnitt des ersten Anschlusselements anzuordnen, der separat von einem Abschnitt des ersten Anschlusselements zur Aufnahme der Frischwasseranschlüsse und der Abwasseranschlüsse der ersten und der zweiten Geräteanschlusseinrichtung des ersten Anschlusselements ausgebildet ist. Dadurch wird eine räumliche Trennung von elektrischen Anschlüssen und Wasseranschlüssen ermöglicht und somit verhindert, dass bei einem Leck eines Wasseranschlusses ein elektrischer Kurzschluss verursacht wird.

Vorzugsweise umfasst das erfindungsgemäße Schnittstellensystem eine Verbindungseinrichtung, welche das erste und das zweite Bordküchengerät in deren Position relativ zueinander sichert. Die Verbindungseinrichtung kann dazu eingerichtet sein, mit den Bordküchengeräten durch Verschrauben oder Verkleben oder mittels einer Steckverbindung verbunden zu werden. Mit Hilfe der Verbindungseinrichtung des erfindungsgemäßen Schnittstellensystems können die Bordküchengeräte vor ihrer Montage in dem Fach der Flugzeugbordküche zu einer eigenständig handhabbaren Baugruppe vormontiert werden.

In einer bevorzugten Ausführung des erfindungsgemäßen Schnittstellensystems umfasst die Verbindungseinrichtung eine Trägerstruktur, die dazu eingerichtet ist, das erste und das zweite Bordküchengerät aufzunehmen. Die Trägerstruktur kann eine Grundform aufweisen, die an die Form des Fachs der Flugzeugbordküche angepasst ist, in dem die Bordküchengeräte montiert werden soll. Beispielsweise kann die Grundform der Trägerstruktur quaderförmig ausgeführt sein. Vorzugsweise ist die Breite der Trägerstruktur an die Breite des Fachs der Flugzeugbordküche angepasst, so dass die Bordküchengeräte sicher in dem Fach der Flugzeugbordküche montiert werden können. Falls gewünscht, kann zusätzlich auch die Höhe und/oder die Tiefe der Trägerstrukturgrundform an die Höhe beziehungsweise Tiefe des Fachs der Flugzeugbordküche angepasst sein. Dadurch wird eine optimale Ausnutzung des für Bordküchengeräte in der Flugzeugbordküche zur Verfügung stehenden Einbauraums gewährleistet.

Die Trägerstruktur des erfindungsgemäßen Schnittstellensystems kann beispielsweise eine Mehrzahl von Streben umfassen. Eine im Wesentlichen durch Streben gebildete Trägerstruktur ist besonders leichtgewichtig zu realisieren. Um der Trägerstruktur die erforderliche Steifigkeit zu verleihen, kann die Trägerstruktur beispielsweise neben Seitenflächen der beispielsweise quaderförmige Grundform der Trägerstruktur definierenden Horizontal- und Vertikalstreben versteifende Diagonalstreben umfassen. Die Streben der Trägerstruktur können auf jede geeignete Weise mit den Bordküchengeräten verbunden werden. Beispielsweise können die Streben der Trägerstruktur mit den Bordküchengeräten verschraubt werden. Die Streben der Trägerstruktur können, falls gewünscht, auch als Hohlstreben ausgebildet sein. Dadurch kann das Gewicht der Trägerstruktur weiter reduziert werden. Darüber hinaus können die Streben bei Bedarf elektrische Leitungen und/oder Wasserleitungen aufnehmen oder sogar selbst als wasserführende Leitungen dienen.

Alternativ oder zusätzlich zu der Trägerstruktur kann die Verbindungseinrichtung des erfindungsgemäßen Schnittstellensystems einen Abschnitt eines Gehäuses des ersten Anschlusselements umfassen, an dem das erste und das zweite Bordküchengerät befestigt werden können. Beispielsweise kann der Gehäuseabschnitt des ersten Anschlusselements ein verstärkter Gehäuseabschnitt sein, an den die Bordküchengeräte geschraubt oder geklebt werden können. Ferner kann im Bereich des Gehäuseabschnitts des ersten Anschlusselements die Flugzeugbordküchenanschlusseinrichtung des ersten Anschlusselements angeordnet sein. Falls gewünscht oder erforderlich, kann/können ein Gehäuse eines Bordküchengeräts oder die Gehäuse der Bordküchengeräte eine an die Form des Gehäuse des ersten Anschlusselements angepasste Ausnehmung zur Aufnahme des Gehäuses des ersten Anschlusselements aufweisen.

Vorzugsweise umfasst die Verbindungseinrichtung des erfindungsgemäßen Schnittstellensystems ferner eine Haltevorrichtung, welche einen oder mehrere mit dem ersten und dem zweiten Bordküchengerät verbindbare(n) Verbindungsstift(e) sowie einen oder mehrere von dem/den Verbindungsstift(n) getragene(n) Abstandshalter umfasst. Der Verbindungsstift kann beispielsweise durch Einstecken, Verkleben oder Verschrauben mit den Bordküchengeräten verbunden werden. Die Haltevorrichtung ermöglicht es, zwei benachbarte Bordküchengeräte unter Einhaltung eines durch den Abstandshalter vorgegebenen Abstands zwischen den benachbarten Bordküchengeräten miteinander zu verbinden. Somit ist es anhand der Haltevorrichtung beispielsweise möglich, Sicherheits-, Kühlungs- und/oder Lüftungsspalte zwischen den Bordküchengeräten zu realisieren.

In einer bevorzugten Ausführungsform des erfindungsgemäßen Schnittstellensystems umfasst die Verbindungseinrichtung ferner eine Haltestrebe. Das erste und das zweite Bordküchengerät können derart an der Haltestrebe befestigt werden, dass die Haltestrebe im in dem Fach der Flugzeugbordküche montierten Zustand der ersten und des zweiten Bordküchengeräts im Bereich einer einem Nutzer zugänglichen Frontseite des ersten und des zweiten Bordküchengeräts angeordnet ist und sich im Wesentlichen parallel zu der Bodenplatte des Fachs erstreckt. Im in dem Fach der Flugzeugbordküche montierten Zustand der Bordküchengeräte kann sich die Haltestrebe beispielsweise im Bereich einer Unterkante des Fachs entlang der Frontseite der Bordküchengeräte über die gesamte Breite des Fachs erstrecken. Die Haltestrebe kann zum Beispiel als L-Profil, U-Profil oder Hohlkörper, insbesondere aber als quaderförmiger Hohlkörper ausgebildet sein. Ferner kann die Haltestrebe einen verstärkten Abschnitt aufweisen mit dem die Bordküchengeräte durch Verschrauben, Verkleben oder eine sonstige Verbindungstechnik verbunden werden können.

Schließlich kann die Verbindungseinrichtung eine Befestigungsplatte umfassen. Das erste und das zweite Bordküchengerät können derart mit der Befestigungsplatte verbunden werden, dass die Befestigungsplatte im in dem Fach der Flugzeugbordküche montierten Zustand des ersten und des zweiten Bordküchengeräts im Bereich einer Seitenfläche des Fachs zugewandten Seitenflächen des ersten und des zweiten Bordküchengeräts angeordnet ist. Mit anderen Worten, im in dem Fach der Flugzeugbordküche montierten Zustand des ersten und des zweiten Bordküchengeräts kann die Befestigungsplatte zwischen einer Seitenfläche des Fachs und dieser Seitenfläche gegenüberliegenden Seitenflächen der Bordküchengeräte angeordnet sein und sich parallel zu diesen Flächen erstrecken. Eine Befestigungsplatte ermöglicht insbesondere das Verbinden von zwei Bordküchengeräten, von denen das erste im in dem Fach der Flugzeugbordküche montierten Zustand im oberen Bereich des Fachs angeordnet ist, während das zweite Bordküchengerät unterhalb des ersten Bordküchengeräts in einem unteren Bereich des Fachs angeordnet ist. Die Befestigungsplatte kann beispielsweise als durchgängige Platte, als Versteifungsstruktur oder als Gitter ausgebildet sein oder mehrere Streben umfassen und durch Verschrauben oder Verkleben an den Bordküchengeräten befestigbar sein.

Eine weitere bevorzugte Ausführungsform des erfindungsgemäßen Schnittstellensystems umfasst ein Montagesystem mit einer ersten und einer zweiten Montageeinrichtung. Die erste Montageeinrichtung ist unmittelbar oder mittelbar, beispielsweise über eine Trägerstruktur der Verbindungseinrichtung, an dem ersten und/oder dem zweiten Bordküchengerät befestigbar. Die zu der ersten Montageeinrichtung komplementäre zweite Montageeinrichtung kann dazu eingerichtet sein, in dem Fach der Flugzeugbordküche angebracht zu werden und mit der ersten Montageeinrichtung zusammenzuwirken, um das erste und das zweite Bordküchengerät in deren Position relativ zu dem Fach der Flugzeugbordküche zu sichern. Bei einer derartigen Gestaltung eines Montagesystems können die Bordküchengeräte auf komfortable Weise außerhalb des Fachs der Flugzeugbordküche mit der ersten Montageeinrichtung verbunden werden. In einem separaten Arbeitsschritt kann die zweite Montageeinrichtung in dem Fach der Flugzeugbordküche angebracht werden. Schließlich können die Bordküchengeräte in das Fach der Flugzeugbordküche eingebracht und durch das Zusammenwirken der an den Bordküchengeräten angebrachten ersten Montageeinrichtung mit der in dem Fach der Flugzeugbordküche befestigten zweiten Montageeinrichtung in dem Fach der Flugzeugbordküche befestigt werden. Dadurch kann zuverlässig verhindert werden, dass sich die Bordküchengeräte ungewollt aus ihrer vorgesehenen Position bewegen oder aus dem Fach der Flugzeugbordküche herausfallen.

Vorzugsweise umfasst die erste Montageeinrichtung des Montagesystems eine erste Führungsschiene, die dazu eingerichtet ist, bei der Montage der Bordküchengeräte in dem Fach der Flugzeugbordküche sowie im in dem Fach der Flugzeugbordküche montierten Zustand der Bordküchengeräte mit einer zweiten Führungsschiene der zweiten Montageeinrichtung zusammenzuwirken. Bei der Montage der Bordküchengeräte in dem Fach der Flugzeugbordküche kann beispielsweise die erste Führungsschiene der ersten Montageeinrichtung verschiebbar in der zweiten Führungsschiene der zweiten Montageeinrichtung aufgenommen werden. Die Bordküchengeräte können dann auf einfache Weise durch Einschieben in das Fach der Flugzeugbordküche eingebracht werden. Die erste Montageeinrichtung umfasst vorzugsweise zwei erste Führungsschienen, die sich im an einem Bordküchengerät oder den Bordküchengeräten befestigten Zustand im Wesentlichen parallel zueinander und parallel zu einer Längsachse des Bordküchengeräts/der Bordküchengeräte erstrecken können. In ähnlicher Weise kann die zweite Montageeinrichtung zwei zweite Führungsschienen umfassen, die sich im in dem Fach der Flugzeugbordküche montierten Zustand im Wesentlichen parallel zueinander und parallel zu einer Längsachse des Fachs erstrecken können.

Die zweite(n) Führungsschiene(n) der zweiten Montageeinrichtung kann/können beispielsweise an einem äußeren Rand einer Bodenplatte des Fachs der Flugzeugbordküche befestigbar sein. Alternativ dazu kann/können die zweite(n) Führungsschiene(n) der zweiten Montageeinrichtung auch an einer Seitenwand des Flugzeugbordküchenfachs anbringbar sein, wobei die zweite(n) Führungsschiene(n) der zweiten Montageeinrichtung dann vorzugsweise in einem unteren Bereich der Seitenwand des Flugzeugbordküchenfachs anbringbar ist/sind, der der Bodenplatte des Flugzeugbordküchenfachs zugewandt ist. Die Anordnung der ersten Führungsschiene(n) der ersten Montageeinrichtung an dem/den mit dem erfindungsgemäßen Schnittstellenssystem verbundenen ersten und/oder zweiten Bordküchengerät(en) ist vorzugsweise an die Position der zweiten Führungsschiene(n) der zweiten Montageeinrichtung in dem Fach der Flugzeugbordküche angepasst. Eine besonders einfache Montage der Bordküchengeräte in dem Fach der Flugzeugbordküche ist dann möglich, wenn zwei erste Führungsschienen der ersten Montageeinrichtung beispielsweise an einander gegenüberliegenden Seitenflächen der Bordküchengeräte angebracht sind, die im in dem Fach der Flugzeugbordküche angeordneten Zustand der Bordküchengeräte Seitenwänden des Flugzeugbordküchenfachs zugewandt sind. Zwei komplementäre Führungsschienen der zweiten Montageeinrichtung sind dann vorzugsweise in einer entsprechenden Höhe an der Bodenplatte oder den Seitenwänden des Fachs der Flugzeugbordküche befestigt.

Das Montagesystem umfasst vorzugsweise ferner einen Führungsvorsprung, der sich von dem ersten Anschlusselement oder von einer Befestigungseinrichtung zur Befestigung des zweiten Anschlusselements in dem Fach der Flugzeugbordküche erstreckt. Der Führungsvorsprung ist dazu eingerichtet, im in dem Fach der Flugzeugbordküche montierten Zustand der Bordküchengeräte in einer zu dem Führungsvorsprung komplementären Führungsöffnung aufgenommen zu werden, die in der Befestigungseinrichtung zur Befestigung des zweiten Anschlusselements in dem Fach der Flugzeugbordküche oder in dem ersten Anschlusselement ausgebildet ist. Die Aufnahme des Führungsvorsprungs in der Führungsöffnung gewährleistet eine sichere Positionierung der Bordküchengeräte in dem Fach der Flugzeugbordküche. Dabei werden auch das erste und das zweite Anschlusselement korrekt zueinander ausgerichtet, so dass das erste und das zweite Anschlusselement mehr oder weniger automatisch miteinander verbunden werden, sobald die Bordküchengeräte die gewünschte Position in dem Flugzeugbordküchenfach erreicht haben. Der Führungsvorsprung kann zum Beispiel durch einen zylinderförmigen oder U-Profil-förmigen Körper gebildet werden. In ähnlicher Weise kann die Führungsöffnung durch eine im Wesentlichen zylinderförmige Ausnehmung gebildet werden oder als U-Profil-förmige Führungsnut ausgebildet sein.

Vorzugsweise umfasst die erste Montageeinrichtung des Montagesystems ferner eine mit dem ersten und/oder dem zweiten Bordküchengerät verbindbare erste Sicherungseinrichtung sowie eine zu der ersten Sicherungseinrichtung der ersten Montageeinrichtung komplementäre zweite Sicherungseinrichtung. Die zweite Sicherungseinrichtung bildet vorzugsweise eine Komponente der zweiten Montageeinrichtung und ist vorzugsweise dazu eingerichtet ist, in dem Fach der Flugzeugbordküche angebracht zu werden und bei der Montage der Bordküchengeräte in dem Fach der Flugzeugbordküche mit der ersten Sicherungseinrichtung zusammenzuwirken, um die Bordküchengeräte in ihrer Position in dem Fach der Flugzeugbordküche zu sichern. Insbesondere haben die erste und die zweite Sicherungseinrichtung die Aufgabe, die Bordküchengeräte in dem Fach der Flugzeugbordküche derart zu sichern, dass eine Bewegung der Bordküchengeräte entlang der Längsachse des Fachs und damit ein Herausfallen der Bordküchengeräte aus dem Fach verhindert wird.

In einer bevorzugten Ausführung des erfindungsgemäßen Schnittstellensystems umfasst die erste Sicherungseinrichtung der ersten Montageeinrichtung ein federnd in seine Verriegelungsstellung vorgespanntes erstes Verriegelungselement und die zweite Sicherungseinrichtung der zweiten Montageeinrichtung ein in dem Fach der Flugzeugbordküche anbringbares zweites Verriegelungselement, wobei das erste Verriegelungselement der ersten Montageeinrichtung dazu eingerichtet ist, bei der Montage der Bordküchengeräte in dem Fach der Flugzeugbordküche mit dem zweiten Verriegelungselement zu verrasten, wenn sich die Bordküchengeräte in einer gewünschten Position in dem Fach der der Flugzeugbordküche befinden. Alternativ oder zusätzlich dazu kann auch das zweite Verriegelungselement der zweiten Sicherungseinrichtung federnd in seine Verriegelungsstellung vorgespannt und dazu eingerichtet sein, bei der Montage der Bordküchengeräte in dem Fach der Flugzeugbordküche mit dem ersten Verriegelungselement zu verrasten, wenn sich die Bordküchengeräte in einer gewünschten Position in dem Fach der der Flugzeugbordküche befinden. Die erste und die zweite Sicherungseinrichtung können mit einem selbsttätigen Rastmechanismus ausgestattet sein, der ein automatisches Verrasten des ersten und des zweiten Verriegelungselements bewirkt, sobald die Bordküchengeräte eine gewünschte Position in dem Fach der Flugzeugbordküche einnehmen. Alternativ zu der Ausstattung mit einem selbsttätigen Rastmechanismus können die erste und die zweite Sicherungseinrichtung jedoch auch so gestaltet sein, dass das Ineinandergreifen der ersten und der zweiten Sicherungseinrichtung manuell, beispielsweise über einen entsprechenden Betätigungsmechanismus bewirkt werden kann.

Bei einer alternativen Ausführungsform des erfindungsgemäßen Schnittstellensystems umfasst die erste Sicherungseinrichtung der ersten Montageeinrichtung ein federnd in seine Entriegelungsstellung vorgespanntes erstes Verriegelungselement. Das erste und das zweite Verriegelungselement können dann durch eine entsprechende Betätigung des ersten Verriegelungselements, durch die das erste Verriegelungselement in seine Verriegelungsstellung bewegt wird, miteinander in Eingriff gebracht werden, um die Bordküchengeräte in einer gewünschten Position in dem Fach der Flugzeugbordküche zu sichern. Alternativ oder zusätzlich dazu kann auch das zweite Verriegelungselement der zweiten Sicherungseinrichtung federnd in seine Entriegelungsstellung vorgespannt und durch eine entsprechende Betätigung, durch die das zweite Verriegelungselement in seine Verriegelungsstellung bewegt wird, mit dem ersten Verriegelungselement in Eingriff gebracht werden. Das erste und/oder das zweite Verriegelungselement kann/können beispielsweise mittels einer Blatt-, Biege-, Torsions- oder Spiralfeder in seine/ihre Verriegelungsstellung oder Entriegelungsstellung vorgespannt sein.

Das erste Verriegelungselement kann beispielsweise um eine Drehachse drehbar gelagert und durch eine Drehbewegung um die Drehachse zwischen seiner Verriegelungsstellung und seiner Entriegelungsstellung verstellbar sein. Die Drehachse erstreckt sich beispielsweise senkrecht zu der Längsachse des Flugzeugbordküchenfachs. Das zweite Verriegelungselement kann dann in Form eines Vorsprungs ausgebildet sein, den das erste Verriegelungselement in seiner Verriegelungsstellung hintergreift. Alternativ dazu kann das erste Verriegelungselement entlang einer Achse, die sich vorzugsweise senkrecht zu der Längsachse des Flugzeugbordküchenfachs erstreckt, verschiebbar gelagert sein und durch Verschieben entlang der Achse zwischen der Verriegelungsstellung und der Entriegelungsstellung verstellbar sein. Das zweite Verriegelungselement ist dann zum Beispiel in Form einer Aufnahmevorrichtung ausgebildet, in der das erste Verriegelungselement in seiner Verriegelungsstellung aufgenommen ist. Insbesondere ist denkbar, dass das zweite Verriegelungselement durch eine Ausnehmung oder Öffnung in der zweiten Führungsschiene des Montagesystems des erfindungsgemäßen Schnittstellensystems gebildet wird, in die ein als Verriegelungsstift ausgebildetes erstes Verriegelungselement zum Sichern der Bordküchengeräte in ihrer Position in dem Fach der Flugzeugbordküche hineingeschoben werden kann.

Das zweite Verriegelungselement kann beispielsweise an einem äußeren Rand einer Bodenplatte des Fachs der Flugzeugbordküche befestigt sein. Alternativ dazu kann das zweite Verriegelungselement auch an einer Seitenwand des Fachs der Flugzeugbordküche angebracht sein, wobei das zweite Verriegelungselement dann vorzugsweise in einem unteren Bereich der Seitenwand des Fachs der Flugzeugbordküche angebracht ist, der der Bodenplatte des Fachs der Flugzeugbordküche zugewandt ist. Darüber hinaus kann das zweite Verriegelungselement in einem vorderen oder, alternativ dazu, hinteren Bereich des Fachs angeordnet sein. Die Anordnung des ersten Verriegelungselements der ersten Montageeinrichtung an dem ersten und/oder dem zweiten Bordküchengerät ist vorzugsweise an die Position des zweiten Verriegelungselements der zweiten Montageeinrichtung in dem Fach der Flugzeugbordküche angepasst. Beispielsweise kann das erste Verriegelungselement an einem unteren Rand des ersten und/oder des zweiten Bordküchengeräts und/oder im Bereich eines einem Nutzer der Bordküchengeräte im in dem Fach der Flugzeugbordküche montierten Zustand der Bordküchengeräte zugewandten vorderen Rands des ersten und/oder zweiten Bordküchengeräts angeordnet sein.

Das erfindungsgemäße Schnittstellensystem umfasst vorzugsweise zwei erste Verriegelungselemente und zwei zweite Verriegelungselemente, die im Bereich zweier einander gegenüberliegender Seitenwände der Bordküchengeräte bzw. im Bereich zweier einander gegenüberliegender Seitenwände des Fachs der Flugzeugbordküche angeordnet sein können. Ferner ist es denkbar, das erfindungsgemäße Schnittstellensystem mit einem oder zwei um eine Drehachse drehbar gelagerten ersten Verriegelungselement(en) und einem oder zwei entsprechend komplementär ausgebildeten zweiten Verriegelungselement(en) und zusätzlich einem oder zwei entlang einer Achse verschiebbar gelagerten ersten Verriegelungselement(en) und einem oder zwei entsprechend komplementär ausgebildeten zweiten Verriegelungselement(en) auszustatten.

Vorzugsweise umfasst die erste Sicherungseinrichtung der ersten Montageeinrichtung ferner ein Betätigungselement zum Bewegen des ersten Verriegelungselements zwischen seiner Verriegelungsstellung und seiner Entriegelungsstellung. Wenn die erste Sicherungseinrichtung ein federnd in seine Verriegelungsstellung vorgespanntes erstes Verriegelungselement umfasst, dient das Betätigungselement in erster Linie dazu, das erste Verriegelungselement aus seiner Verriegelungsstellung in seine Entriegelungsstellung zu bewegen. Wenn die erste Sicherungseinrichtung dagegen ein federnd in seine Entriegelungsstellung vorgespanntes erstes Verriegelungselementumfasst, dient das Betätigungselement in erster Linie dazu, das erste Verriegelungselement aus seiner Entriegelungsstellung in seine Verriegelungsstellung zu bewegen. Zusätzlich oder alternativ dazu kann die zweite Sicherungseinrichtung der zweiten Montageeinrichtung ein Betätigungselement zum Bewegen des zweiten Verriegelungselements zwischen seiner Verriegelungsstellung und seiner Entriegelungsstellung umfassten. Wenn die zweite Sicherungseinrichtung ein federnd in seine Verriegelungsstellung vorgespanntes zweites Verriegelungselement umfasst, dient das Betätigungselement dann in erster Linie dazu, das zweite Verriegelungselement aus seiner Verriegelungsstellung in seine Entriegelungsstellung zu bewegen. Wenn die zweite Sicherungseinrichtung dagegen ein federnd in seine Entriegelungsstellung vorgespanntes zweites Verriegelungselementumfasst, dient das Betätigungselement in erster Linie dazu, das zweite Verriegelungselement aus seiner Entriegelungsstellung in seine Verriegelungsstellung zu bewegen.

Das Betätigungselement der ersten Sicherungseinrichtung kann über ein Verbindungselement mit dem ersten Verriegelungselement verbunden sein. In ähnlicher Weise kann ein Betätigungselement der zweiten Sicherungseinrichtung über ein Verbindungselement mit dem zweiten Verriegelungselement verbunden sein. Das Verbindungselement ermöglicht es, das Betätigungselement und das von dem Betätigungselement zwischen seiner Verriegelungsstellung und seiner Entriegelungsstellung bewegbare Verriegelungselement an verschiedenen Positionen an dem ersten und/oder zweiten Bordküchengerät bzw. in dem Fach der Flugzeugbordküche anzuordnen.

Das Verbindungselement kann beispielsweise mechanische Komponenten, wie z.B. Schiebe-, Zug- oder Drehverbindungen, Kopplungsgestänge, Kopplungsgelenke, Bewegungsumlenkungen, Bewegungsverteiler oder dergleichen, oder elektrische Komponenten, wie z.B. Aktuatoren, Servomotoren oder dergleichen, umfassen. Das Verbindungselement kann jedoch auch einstückig mit dem Betätigungselement ausgebildet sein. Das Betätigungselement der ersten Sicherungseinrichtung kann, ebenso wie das Betätigungselement der zweiten Sicherungseinrichtung, dazu eingerichtet sein, beispielsweise durch eine entsprechende Gestaltung eines Verbindungselements, zwei oder mehr Verriegelungselemente zwischen ihrer Verriegelungsstellung und ihrer Entriegelungsstellung zu bewegen.

In einer bevorzugten Ausführung des erfindungsgemäßen Schnittstellensystems ist das Betätigungselement der ersten Montageeinrichtung um eine Achse zwischen einer unbetätigten Stellung und einer Betätigungsstellung verschwenkbar. Wenn das erste Verriegelungselement federnd in seine Verriegelungsstellung vorgespannt ist, ist das Betätigungselement vorzugsweise dazu eingerichtet, in seiner betätigten Stellung das erste Verriegelungselement in seiner Entriegelungsstellung zu halten. Wenn das erste Verriegelungselement dagegen federnd in seine Entriegelungsstellung vorgespannt ist, ist das Betätigungselement vorzugsweise dazu eingerichtet, in seiner betätigten Stellung das erste Verriegelungselement in seiner Verriegelungsstellung zu halten. In ähnlicher Weise kann ein Betätigungselement der zweiten Montageeinrichtung um eine Achse zwischen einer unbetätigten Stellung und einer Betätigungsstellung verschwenkbar sein. Wenn das zweite Verriegelungselement federnd in seine Verriegelungsstellung vorgespannt ist, ist das Betätigungselement der zweiten Montageeinrichtung dann vorzugsweise dazu eingerichtet, in seiner betätigten Stellung das zweite Verriegelungselement in seiner Entriegelungsstellung zu halten. Wenn das zweite Verriegelungselement dagegen federnd in seine Entriegelungsstellung vorgespannt ist, ist das Betätigungselement vorzugsweise dazu eingerichtet, in seiner betätigten Stellung das zweite Verriegelungselement in seiner Verriegelungsstellung zu halten.

In einer bevorzugten Ausführung des erfindungsgemäßen Schnittstellensystems erstreckt sich das Betätigungselement im mit dem ersten und/oder dem zweiten Bordküchengerät verbundenen Zustand der ersten Sicherungseinrichtung in seiner Betätigungsstellung in einem Winkel von 30 bis 90°, vorzugsweise 60°, zu einer Seitenfläche des ersten und/oder des zweiten Bordküchengeräts, die im in dem Fach der Flugzeugbordküche angeordneten Zustand des ersten und/oder des zweiten Bordküchengeräts eine Frontseite des ersten und/oder des zweiten Bordküchengeräts bildet. In seiner unbetätigten Stellung erstreckt sich das Betätigungselement dagegen vorzugsweise im Wesentlichen parallel zu dieser Seitenfläche des ersten und/oder des zweiten Bordküchengeräts. Das Betätigungselement liegt dann in seiner unbetätigten Stellung an der Frontseite der Bordküchengeräte an und bietet somit keine oder nur wenig Angriffsfläche, wodurch Platz gespart und das Risiko einer unerwünschten Betätigung des Betätigungselements minimiert wird. In seiner Betätigungsstellung kann das Betätigungselement dagegen als Griff dienen, der das Entnehmen der Bordküchengeräte aus dem Fach der Flugzeugbordküche erleichtert. Beispielsweise kann ein auch als Griff nutzbares Betätigungselement in Form einer Klappe ausgebildet sein, die sich im in dem Fach der Flugzeugbordküche montierten Zustand der Bordküchengeräte im Wesentlichen über die Breite der Bordküchengeräte und/oder die Breite des Fachs der Flugzeugbordküche erstreckt. Ein Betätigungselement der zweiten Montageeinrichtung kann ebenso, wie hier im Zusammenhang mit einem Betätigungselement der ersten Montageeinrichtung beschrieben, gestaltet sein.

Ein erfindungsgemäßes Gerätemodul für eine Flugzeugbordküche umfasst mindestens ein erstes und mindestens ein zweites Bordküchengerät, die mit dem ersten Anschlusselement eines oben beschriebenen Schnittstellensystems verbunden sind, wobei ein internes elektrisches System, ein internes Frischwasserversorgungssystem und/oder ein internes Abwasserentsorgungssystem der Bordküchengeräte mit den Geräteanschlusseinrichtungen des ersten Anschlusselements des erfindungsgemäßen Schnittstellensystems verbunden ist/sind.

Vorzugsweise sind das erste und das zweite Bordküchengerät des erfindungsgemäßen Gerätemoduls bezogen auf eine Längsachse der Bordküchengerät nebeneinander, übereinander und/oder hintereinander angeordnet. Das Gerätemodul kann auch ein erstes, ein zweites und ein drittes Bordküchengerät umfassen, wobei beispielsweise das erste und das zweite Bordküchengerät dazu vorgesehen sein können, nebeneinander in einem einem Anwender zugewandten vorderen Bereich des Fachs der Flugzeugbordküche angeordnet zu werden. Das dritte Bordküchengerät kann dagegen zur Anordnung in einem hinteren Bereich des Fachs vorgesehen sein. Eine derartige Konfiguration des Gerätemoduls bietet sich beispielsweise an, wenn das dritte Bordküchengerät in Form eines Wasserspeichers oder eines Wassererhitzers ausgebildet ist, der das erste und/oder das zweite Bordküchengerät mit Wasser versorgt, im Betrieb der Flugzeugbordküche für einen Anwender jedoch nicht unmittelbar zugänglich sein muss.

Bei einem erfindungsgemäßen Verfahren zur Montage eines ersten und eines zweiten Bordküchengeräts in einer Flugzeugbordküche wird zunächst ein internes elektrisches System, ein internes Frischwasserversorgungssystem und/oder ein internes Abwasserentsorgungssystem des ersten Bordküchengeräts mit der ersten Geräteanschlusseinrichtung des ersten Anschlusselements eines oben beschriebenen Schnittstellensystems verbunden. Ferner wird ein internes elektrisches System, ein internes Frischwasserversorgungssystem und/oder ein internes Abwasserentsorgungssystem des zweiten Bordküchengeräts mit der zweiten Geräteanschlusseinrichtung des ersten Anschlusselements eines oben beschriebenen Schnittstellensystems verbunden. Diese Montageschritte können außerhalb der Flugzeugbordküche durchgeführt werden. Ferner wird das zweite Anxhlusselement des Schnittstellensystems in einem Fach der Flugzeugbordküche befestigt.

Anschließend werden die mit dem ersten Anschlusselement des Schnittstellensystems verbundenen Bordküchengeräte in das Fach der Flugzeugbordküche eingebracht. Schließlich wird die Flugzeugbordküchenanschlusseinrichtung des ersten Anschlusselements mit der Flugzeugbordküchenanschlusseinrichtung des zweiten Anschlusselements verbunden. Dadurch werden anhand des Verteilersystems des ersten Anschlusselements die erste und die zweite Geräteanschlusseinrichtung des ersten Anschlusselements und somit das interne elektrische System, das interne Frischwasserversorgungssystem und/oder das interne Abwasserentsorgungssystem des ersten und/oder des zweiten Bordküchengeräts an das elektrische System, das Frischwasserversorgungssystem und/oder das Abwasserentsorgungssystem der Flugzeugbordküche angeschlossen. Das erfindungsgemäße Verfahren erlaubt es, ein mehrere Bordküchengeräte umfassendes Gerätemodul weitgehend vorzumontieren und bei der Endmontage mit nur wenig Arbeitsaufwand in der Flugzeugbordküche zu installieren. Dadurch kann der Zeit- und Personalaufwand bei der Endmontage der Bordküchengeräte reduziert werden.

In einer bevorzugten Ausführungsform des Verfahrens werden das erste und das zweite Bordküchengerät vor dem Einbringen der Bordküchengeräte in das Fach der Flugzeugbordküche mittels einer oben beschriebenen Verbindungseinrichtung des Schnittstellensystems miteinander verbunden und somit in ihrer Position relativ zueinander gesichert.

Bevorzugte Ausführungsbeispiele der Erfindung werden nun anhand der beigefügten schematischen Zeichnungen näher erläutert, von denen
- Figur 1: ein Teil eines erstes Ausführungsbeispiels eines Schnittstellensystems zur Verwendung in einer Flugzeugbordküche zeigt,
- Figur 2: den Teil des Schnittstellensystems gemäß Figur 1 in einem mit zwei Bordküchengeräten zu einem Gerätemodul verbundenen Zustand zeigt,
- Figur 3: das Gerätemodul gemäß Figur 2 bei der Montage in einem Fach einer Flugzeugbordküche zeigt,
- Figur 4: das Gerätemodul gemäß Figur 2 in einem in dem Fach der Flugzeugbordküche montierten Zustand zeigt,
- Figur 5: ein weiteres Ausführungsbeispiel eines Schnittstellensystems zur Verwendung in einer Flugzeugbordküche zeigt, wobei ein Teil des Schnittstellensystems mit zwei Bordküchengeräten zu einem Gerätemodul verbundenen ist,
- Figur 6: eine Detaildarstellung eines ersten Abschnitts eines ersten Anschlusselements des Schnittstellensystems gemäß Figur 5 zeigt,
- Figur 7: eine Detaildarstellung eines zweiten Abschnitts des ersten Anschlusselements des Schnittstellensystems gemäß Figur 5 zeigt,
- Figur 8: eine Detaildarstellung des ersten Abschnitts des ersten Anschlusselements gemäß Figur 6 zeigt,
- Figur 9: eine Haltestrebe des Schnittstellensystems gemäß Figur 5 zeigt,
- Figur 10: eine Haltevorrichtung des Schnittstellensystems gemäß Figur 5 zeigt,
- Figur 11a: erste Führungsschienen einer ersten Montageeinrichtung des Schnittstellensystems gemäß Figur 5 zeigt,
- Figur 11b: in einem Fach einer Flugzeugbordküche montierte zweite Führungsschienen einer zweiten Montageeinrichtung des Schnittstellensystems gemäß Figur 5 zeigt,
- Figur 12: ein weiteres Ausführungsbeispiel einer ersten und einer zweiten Sicherungseinrichtung zeigt,
- Figur 13: ein weiteres Ausführungsbeispiel eines Schnittstellensystems zur Verwendung in einer Flugzeugbordküche zeigt, wobei ein Teil des Schnittstellensystems mit zwei übereinander angeordneten Bordküchengeräten zu einem Gerätemodul verbundenen ist,
- Figur 14: noch ein weiteres Ausführungsbeispiel eines Schnittstellensystems zur Verwendung in einer Flugzeugbordküche zeigt, wobei ein Teil des Schnittstellensystems mit drei Bordküchengeräten zu einem Gerätemodul verbundenen ist.

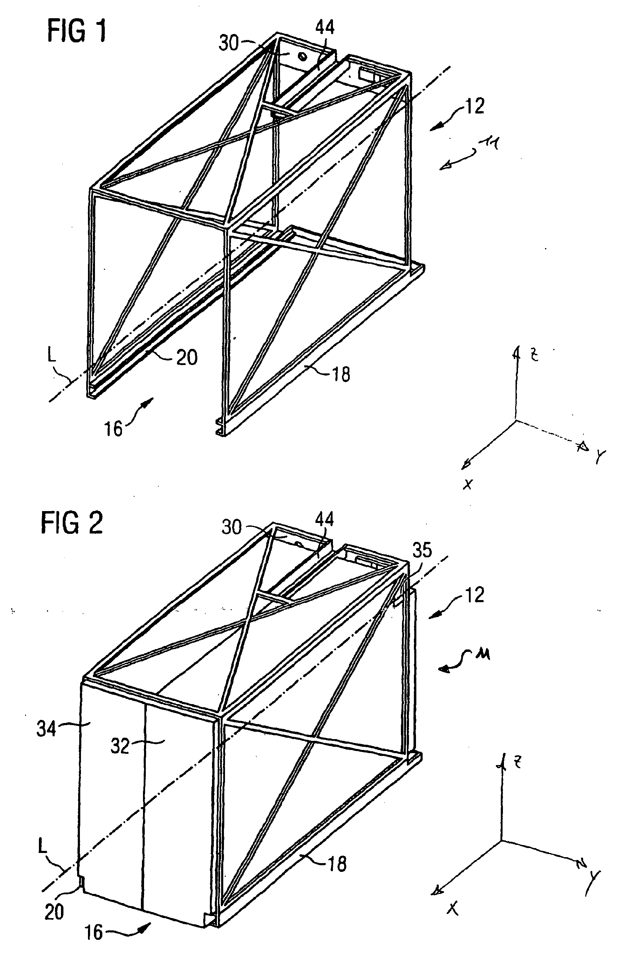

In den Figuren ist ein zur Verwendung in einer Flugzeugbordküche vorgesehenes Schnittstellensystem allgemein mit 10 bezeichnet. Das Schnittstellensystem 10 umfasst eine Verbindungseinrichtung 11, die dazu dient, eine Mehrzahl von zur Montage in der Flugzeugbordküche vorgesehene Bordküchengeräte 32, 34 in deren Position relativ zueinander zu sichern. Bei dem in den Figuren 1 bis 4 dargestellten Ausführungsbeispiel des Schnittstellensystems 10 umfasst die Verbindungseinrichtung 11 eine Trägerstruktur 12, wobei die Trägerstruktur 12 eine an die Form eines Fachs 14 einer Flugzeugbordküche angepasste quaderförmige Grundform aufweist. Die Trägerstruktur 12 wird durch eine Mehrzahl von Streben gebildet. Insbesondere umfasst die Trägerstruktur 12, neben Seitenflächen der quaderförmigen Trägerstrukturgrundform definierenden Horizontal- sowie Vertikalstreben, der Versteifung der Trägerstruktur 12 dienende Diagonalstreben.

Ferner umfasst das Schnittstellensystem 10 ein Montagesystem 15, das dazu dient, die Bordküchengeräte 32, 34 in deren Position relativ zu dem Fach 14 zu sichern. An der Trägerstruktur 12 des Schnittstellensystems 10 ist eine erste Montageeinrichtung 16 des Montagesystems 15 befestigt. Die erste Montageeinrichtung 16 umfasst zwei erste Führungsschienen 18, 20, die an zwei einander gegenüberliegenden Horizontalstreben der Trägerstruktur 12 befestigt sind und sich in einem in dem Fach 14 der Flugzeugbordküche montierten Zustand der Trägerstruktur 12 benachbart zu einer Bodenplatte 22 des Fachs 14 der Flugzeugbordküche in Richtung einer Längsachse L der Trägerstruktur 12, der Bordküchengeräte 32, 34 und des Fachs 14 erstrecken.

Die ersten Führungsschienen 18, 20 der ersten Montageeinrichtung 16 sind dazu vorgesehen, mit zwei zweiten Führungsschienen 24 einer zweiten Montageeinrichtung 28 des Montagesystems 15 zusammenzuwirken, wobei in den Figuren 1 bis 4 lediglich eine zweite Führungsschiene 24 zu sehen ist. Die zweiten Führungsschienen 24 der zweiten Montageeinrichtung 28 sind an der Bodenplatte 22 des Fachs 14 der Flugzeugbordküche befestigt und erstrecken sich, ebenso wie die ersten Führungsschienen 18, 20 der ersten Montageeinrichtung 16, in Richtung der Längsachse L. Durch das Zusammenwirken der ersten Führungsschienen 18, 20 der ersten Montageeinrichtung 16 mit den zweiten Führungsschienen 24 der zweiten Montageeinrichtung 28 kann die Trägerstruktur 12 auf einfache Weise durch Einschieben in das Fach 14 der Flugzeugbordküche in dem Fach 14 der Flugzeugbordküche montiert werden.

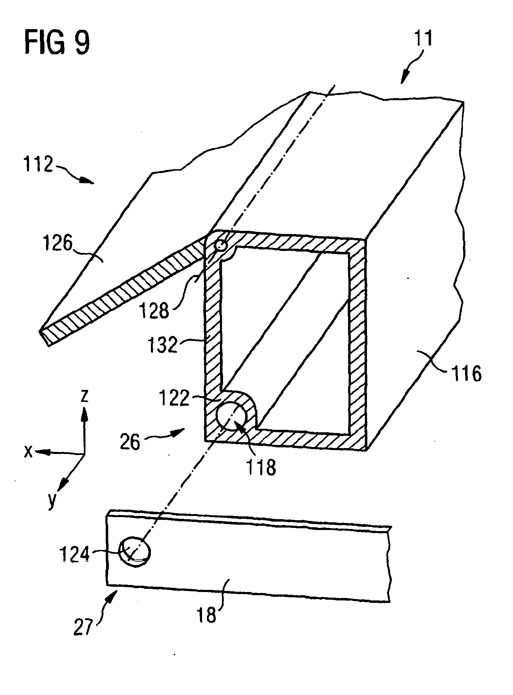

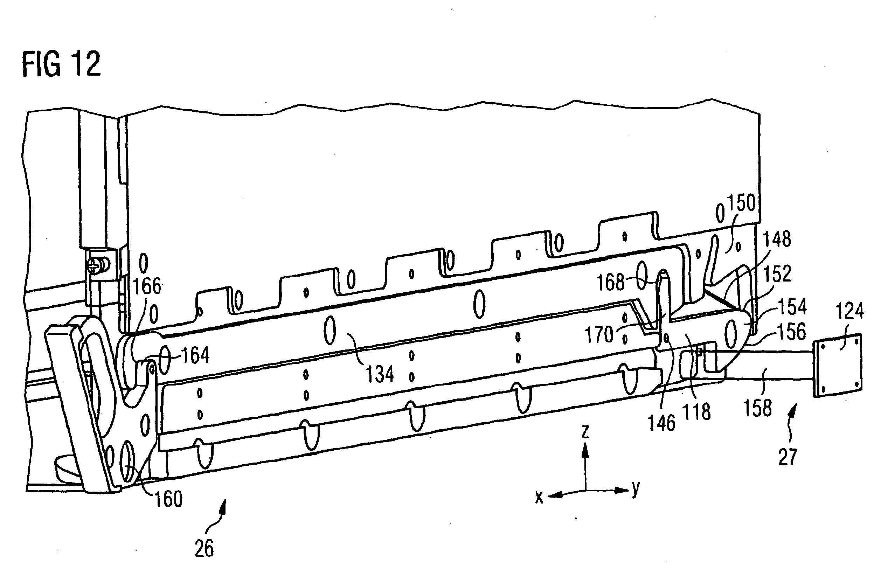

Im in dem Fach 14 der Flugzeugbordküche montierten Zustand der Trägerstruktur 12 wird die Trägerstruktur 12 bereits durch das Zusammenwirken der ersten Führungsschienen 18, 20 der ersten Montageeinrichtung 16 mit den zweiten Führungsschienen 24 der zweiten Montageeinrichtung 28 bis zu einem gewissen Grad in ihrer Position in dem Fach 14 der Flugzeugbordküche gesichert. Um auch eine unerwünschte Verschiebung der Trägerstruktur 12 in dem Fach 14 der Flugzeugbordküche in Richtung der Längsachse L des Fachs 14 der Flugzeugbordküche zu unterbinden, umfasst das Schnittstellensystem 10 ferner ein Sicherungssystem. Mögliche Ausgestaltungen dieses Sicherungssystems werden im Folgenden im Zusammenhang mit den Figuren 9 und 12 näher erläutert.

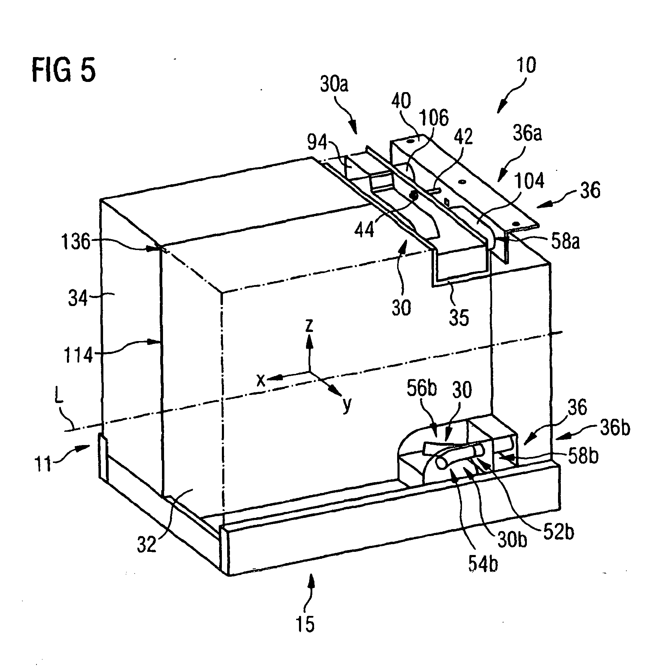

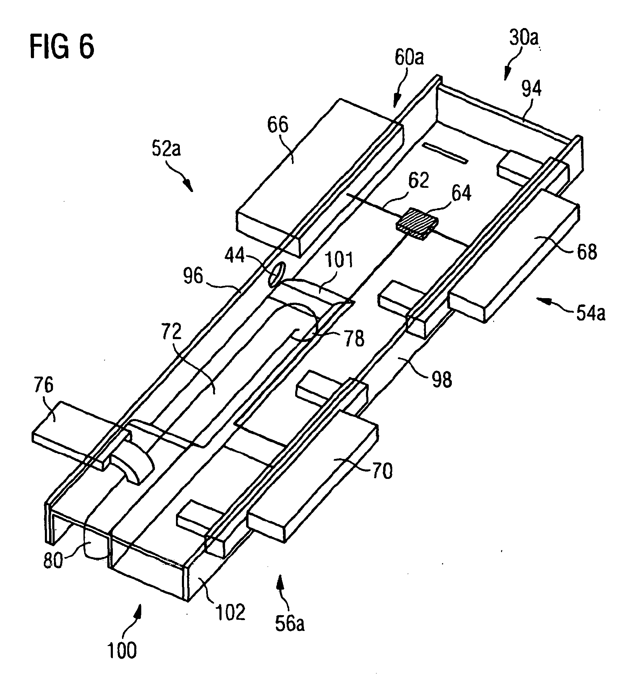

Das Schnittstellensystem 10 umfasst ferner ein erstes Anschlusselement 30. Das erste Anschlusselement 30 ist dazu eingerichtet, mit einem internen elektrischen System, einem internen Frischwasserversorgungssystem und/oder einem internen Abwasserentsorgungssystem eines ersten Bordküchengeräts 32 und mit einem internen elektrischen System, einem internen Frischwasserversorgungssystem und/oder einem internen Abwasserentsorgungssystem eines zweiten Bordküchengeräts 34 verbunden zu werden. In den Figuren 1 bis 4 ist das erste Anschlusselement 30 lediglich schematisch veranschaulicht. Der Aufbau des ersten Anschlusselements 30 wird daher im Folgenden im Zusammenhang mit den Figuren 5 und 6 erörtert.

Um den Anschluss des internen elektrischen System, internen Frischwasserversorgungssystems und/oder internen Abwasserentsorgungssystem der Bordküchengeräte 32, 34 an das erste Anschlusselement 30 zu erleichtern, sind die Gehäuse der Bordküchengeräte 32, 34 im Bereich einer dem ersten Anschlusselement 30 zugewandten Seitenfläche mit einer Ausnehmung 35 versehen. In der Ausnehmung 35 können elektrische Leitungen, der Frischwasserversorgung und/oder der Abwasserentsorgung der Bordküchengeräte 32, 34 dienende Leitungen sicher aufgenommen werden, ohne dass sie die Montage der Bordküchengeräte 32, 34 in der Trägerstruktur 12 oder dem Fach 14 der Flugzeugbordküche behindern.

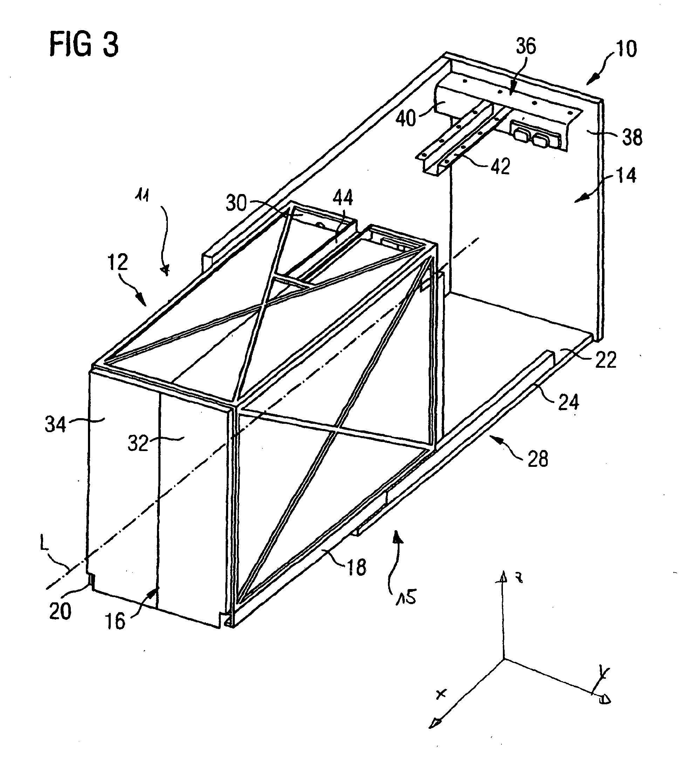

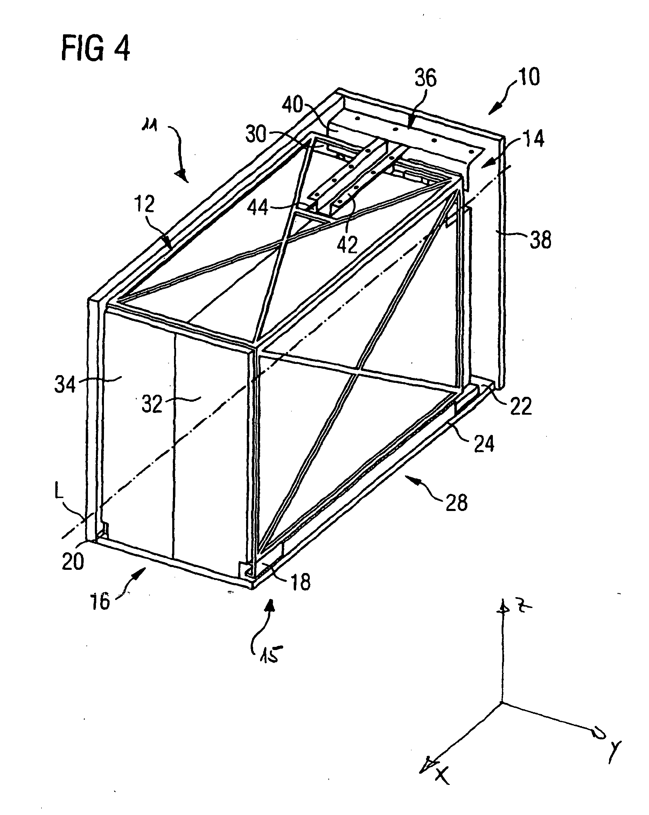

Wie in den Figuren 3 und 4 zu erkennen ist, umfasst das Schnittstellensystem 10 ferner ein zu dem ersten Anschlusselement 30 komplementäres zweites Anschlusselement 36. Das zweite Anschlusselement 36 ist an einer Rückwand 38 des Fachs 14 der Flugzeugbordküche in einer Position befestigt, die an die Anordnung des ersten Anschlusselements 30 angepasst ist. Im in dem Fach 14 der Flugzeugbordküche montierten Zustand der Bordküchengeräte 32, 34 wirkt das erste Anschlusselement 30 mit dem zweiten Anschlusselement 36 zusammen. Das zweite Anschlusselement 36 ist mit einem in den Figuren nicht näher veranschaulichten elektrischen System, Frischwasserversorgungssystem und/oder Abwasserentsorgungssystem der Flugzeugbordküche verbunden. Durch das Zusammenwirken des ersten Anschlusselements 30 mit dem zweiten Anschlusselement 36 wird somit eine Plug-and-Play-Verbindung geschaffen, durch die die mit dem Schnittstellensystem 10 verbundenen Bordküchengeräte 32, 34 bei der der Montage in dem Fach 14 der Flugzeugbordküche automatisch mit dem elektrischen System, dem Frischwasserversorgungssystem und/oder dem Abwasserentsorgungssystem der Flugzeugbordküche verbunden werden.

Das zweite Anschlusselement 36 ist mittels einer Befestigungseinrichtung 40 an der Rückwand 38 des Fachs 14 der Flugzeugbordküche befestigt. Von der Befestigungseinrichtung 40, die in Form eines L-Profils ausgeführt ist, erstreckt sich ein in Form eines U-förmigen Profils ausgebildeter Führungsvorsprung 42. Der Führungsvorsprung 42 ist dazu vorgesehen, in einer Führungsöffnung 44 aufgenommen zu werden. Die Führungsöffnung 44 ist als U-Profil-förmige Führungsnut ausgebildet und erstreckt sich von dem ersten Anschlusselement 30 entlang der Längsachse L der Trägerstruktur 12 in Richtung eines Innenraums der Trägerstruktur 12. Durch das Zusammenwirken des Führungsvorsprungs 42 mit der Führungsöffnung 44 wird die Trägerstruktur 12 auf komfortable Weise derart in dem Fach 14 der Flugzeugbordküche positioniert, dass das erste Anschlusselement 30 sicher mit dem zweiten Anschlusselement 36 in Eingriff gelangen kann.

Die Figuren 5 bis 10 zeigen ein weiteres Ausführungsbeispiel eines zur Verwendung in einer Flugzeugbordküche vorgesehenen Schnittstellensystems 10, wobei hier im Zusammenhang mit dem in den Figuren 5 bis 10 veranschaulichten Schnittstellensystem 10 erläuterte Merkmale auch in dem Schnittstellensystem 10 gemäß den Figuren 1 bis 4 verwirklicht sein können. Bei dem Schnittstellensystem 10 gemäß den Figuren 5 bis 10 wird jedoch auf Ausgestaltung der Verbindungseinrichtung 11 mit einer Trägerstruktur 12 verzichtet, um zusätzlich Platz und Gewicht zu sparen.

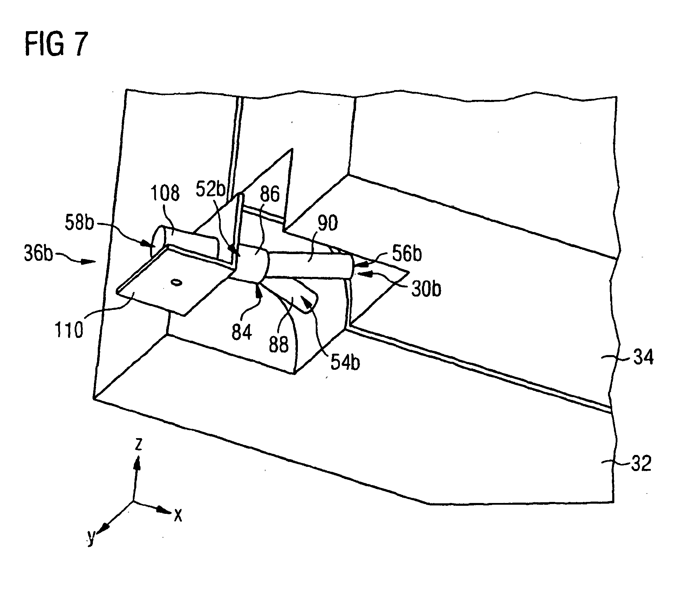

Wie aus den Figuren 5 bis 8 ersichtlich wird, umfasst das erste Anschlusselement 30 einen in Figur 6 detailliert veranschaulichten ersten Abschnitt 30a sowie einen in Figur 7 in einer Detaildarstellung gezeigten zweiten Abschnitt 30b. Das erste Anschlusselement 30 umfasst eine Flugzeugbordküchenanschlusseinrichtung 52a, 52b eine erste Geräteanschlusseinrichtung 54a, 54b sowie eine zweite Geräteanschlusseinrichtung 56a, 56b. Aufgrund der zweiteiligen Ausgestaltung des ersten Anschlusselements 30 sind die Flugzeugbordküchenanschlusseinrichtung 52a, 52b, die erste Geräteanschlusseinrichtung 54a, 54b sowie die zweite Geräteanschlusseinrichtung 56a, 56b jeweils ebenfalls zweiteilig ausgebildet, wobei erste Abschnitte 52a, 54a, 56a der Flugzeugbordküchenanschlusseinrichtung 52a, 52b, der ersten Geräteanschlusseinrichtung 54a, 54b und der zweiten Geräteanschlusseinrichtung 56a, 56b jeweils dem ersten Abschnitt 30a des ersten Anschlusselements 30 und zweite Abschnitte 52b, 54b, 56b der Flugzeugbordküchenanschlusseinrichtung 52a, 52b, der ersten Geräteanschlusseinrichtung 54a, 54b und der zweiten Geräteanschlusseinrichtung 56a, 56b jeweils dem zweiten Abschnitt 30b des ersten Anschlusselements 30 zugeordnet sind. Das erste Anschlusselement 30 ist über die erste Geräteanschlusseinrichtung 54a, 54b mit einem internen elektrischen System, einem internen Frischwasserversorgungssystem und einem internen Abwasserentsorgungssystem des ersten Bordküchengeräts 32 verbindbar. Ferner ist das erste Anschlusselement 30 über die zweite Geräteanschlusseinrichtung 56a, 56b mit einem internen elektrischen System, einem internen Frischwasserversorgungssystem und einem internen Abwasserentsorgungssystem des zweiten Bordküchengeräts 34 verbindbar.

Das erste Anschlusselement 30 umfasst ferner ein ebenfalls zweiteilig ausgebildetes Verteilersystem 60a, 60b. Ein erster Abschnitt 60a des Verteilersystems 60a, 60b verbindet den dem ersten Abschnitt 30a des ersten Anschlusselements 30 zugeordneten ersten Abschnitt 52a der Flugzeugbordküchenanschlusseinrichtung 52a, 52b mit den ersten Abschnitten 54a, 56a der ersten und der zweiten Geräteanschlusseinrichtung 54a, 54b, 56a, 56b, siehe Figur 6. Ein zweiter Abschnitt 60b des Verteilersystems 60a, 60b verbindet den dem zweiten Abschnitt 30b des ersten Anschlusselements 30 zugeordneten zweiten Abschnitt 52b der Flugzeugbordküchenanschlusseinrichtung 52a, 52b mit den zweiten Abschnitten 54b, 56b der ersten und der zweiten Geräteanschlusseinrichtung 54a, 54b, 56a, 56b, siehe Figur 7.

Der erste Abschnitt 60a des Verteilersystems 60a, 60b umfasst einen Stromverteiler 62, der anhand einer Elektronikschaltung 64 einen elektrischen Anschluss 66 des ersten Abschnitts 52a der Flugzeugbordküchenanschlusseinrichtung 52a, 52b mit einem elektrischen Anschluss 68 des ersten Abschnitts 54a der ersten Geräteanschlusseinrichtung 54a, 54b und mit einem elektrischen Anschluss 70 des ersten Abschnitts 56a der zweiten Geräteanschlusseinrichtung 56a, 56b verbindet, siehe Figur 6. Die Elektronikschaltung 64 sorgt dafür, dass die von den Bordküchengeräten 32, 34 aus dem elektrischen System der Flugzeugbordküche bezogene elektrische Gesamtleistung einen vorgegebenen Wert nicht überschreitet. Die elektrischen Anschlüsse 66, 68, 70 können als genormte Stecker ausgebildet sein.

Der erste Abschnitt 60a des Verteilersystems 60a, 60b umfasst ferner einen Frischwasserverteiler 72, der über ein Frischwasserrohrsystem einen Frischwasseranschluss 76 des ersten Abschnitts 52a der Flugzeugbordküchenanschlusseinrichtung 52a, 52b mit einem Frischwasseranschluss 78 des ersten Abschnitts 54a der ersten Geräteanschlusseinrichtung 54a, 54b und einem Frischwasseranschluss 80 des ersten Abschnitts 56a der zweiten Geräteanschlusseinrichtung 56a, 56b verbindet, siehe Figur 6. Die Frischwasseranschlüsse 76, 78, 80 verhindern einen unerwünschten Austritt von Frischwasser, wenn der erste Abschnitt 30a des erstes Anschlusselements 30 flugzeugbordküchenseitig oder bordküchengeräteseitig nicht angeschlossen ist. Das Frischwasserrohrsystem umfasst drei 90°-Rohrbögen, sowie ein Verteilerrohr.

Der zweite Abschnitt 60b des Verteilersystems 60a, 60b umfasst einen Abwasserverteiler 82, der über ein Abwasserrohrsystems einen Abwasseranschluss 86 des zweiten Abschnitts 52b der Flugzeugbordküchenanschlusseinrichtung 52a, 52b mit einem Abwasseranschluss 88 des zweiten Abschnitts 54b der ersten Geräteanschlusseinrichtung 54a, 54b und einem Abwasseranschluss 90 des zweiten Abschnitts 56b der zweiten Geräteanschlusseinrichtung 56a, 56b verbindet, siehe Figur 7. Die Abwasseranschlüsse 86, 88, 90 verhindern den unerwünschten Austritt von Abwasser, wenn der zweite Abschnitt 30b des erstes Anschlusselements 30 flugzeugbordküchenseitig oder bordküchengerätseitig nicht angeschlossen ist. Das Abwasserrohrsystem ist im Wesentlichen in Form eines Y-förmigen Verteilerrohrs ausgebildet.

In einem in dem Fach 14 der Flugzeugbordküche montierten Zustand der Bordküchengeräte 32, 34 befinden sich die Frischwasseranschlüsse 76, 78, 80 in einem oberen (in Richtung von z) und zugleich hinteren (in Gegenrichtung von x) Bereich des Fachs 14, während sich die Abwasseranschlüsse 86, 88, 90 in einem unteren (in Gegenrichtung von z) und zugleich hinteren (in Gegenrichtung von x) Bereich des Fachs 14 befinden. Durch eine derartige Anordnung der Frischwasseranschlüsse 76, 78, 80 und Abwasseranschlüsse 86, 88, 90 kann unter Ausnutzung der in Gegenrichtung von z orientierten Schwerkraft Frischwasser von oben in die Bordküchengeräte 32, 34 hinein fließen und Abwasser nach unten aus den Bordküchengeräten 32, 34 heraus fließen.

Der Stromverteiler 62 und der Frischwasserverteiler 72 sind in einem Gehäuse 94 des ersten Abschnitts 30a des ersten Anschlusselements 30 aufgenommen. Dadurch sind die Elektronikschaltung 64 des elektrischen Stromverteilers 62 und das Frischwasserrohrsystem des Frischwasserverteilers 72 in einer soliden Umhausung sicher verstaut und geschützt. Der elektrische Anschluss 66 und der Frischwasseranschluss 76 des ersten Abschnitts 52a der Flugzeugbordküchenanschlusseinrichtung 52a, 52b sind getrennt voneinander an einer ersten Seitenfläche 96 des Gehäuses 94 angeordnet, die im in dem Fach 14 der Flugzeugbordküche montierten Zustand der Bordküchengeräte 32, 34 der Rückwand 38 des Fachs 14 zugewandt ist und erstrecken sich in Richtung der Rückwand 38 des Fachs 14 (in Gegenrichtung von x). An einer der ersten Seitenfläche 96 gegenüberliegenden zweiten Seitenfläche 98 des Gehäuses 94 sind die elektrischen Anschlüsse 68, 70 der ersten Abschnitte 54a, 56a der Geräteanschlusseinrichtungen 54a, 54b, 56a, 56b getrennt voneinander angeordnet. Die Frischwasseranschlüsse 78, 80 der ersten Abschnitte 54a, 56a der Geräteanschlusseinrichtungen 54a, 54b, 56a, 56b sind dagegen im Bereich einer an die erste und die zweite Seitenfläche 96, 98 des Gehäuses 94 angrenzenden, im in dem Fach 14 der Flugzeugbordküche montierten Zustand der Bordküchengeräte 32, 34 der Bodenplatte 22 des Fachs 14 zugewandten dritten Seitenfläche 100 des Gehäuses 94 angeordnet. In dem Gehäuse 94 sind der Frischwasserverteiler 72 und der Stromverteiler 62 durch eine Trennwand 101 voneinander getrennt, so dass bei einem Leck in dem Frischwasserrohrsystem des Frischwasserverteilers 72 kein Wasser mit der Elektronikschaltung 64 des Stromverteilers 62 in Kontakt kommen kann.

Anders als der erste Abschnitt 30a des ersten Anschlusselements 30 umfasst der zweite Abschnitt 30b des ersten Anschlusselements 30 kein Gehäuse. Ähnlich wie der Frischwasseranschluss 76 des ersten Abschnitts 52a der Flugzeugbordküchenanschlusseinrichtung 52a, 52b erstreckt sich jedoch auch der Abwasseranschluss 86 des zweiten Abschnitts 52b der Flugzeugbordküchenanschlusseinrichtung 52a, 52b im in dem Fach 14 der Flugzeugbordküche montierten Zustand der Bordküchengeräte 32, 34 in Richtung der Rückwand 38 des Fachs 14 (in Gegenrichtung von x).

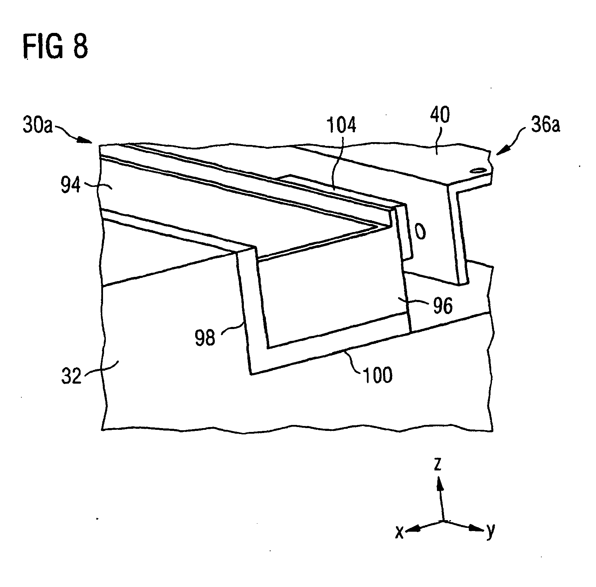

Das in den Figuren 5 und 8 gezeigte zweite Anschlusselement 36 des Schnittstellensystems 10 ist, ebenso wie das erste Anschlusselement 30, zweiteilig ausgebildet und umfasst einen ersten Abschnitt 36a sowie einen zweiten Abschnitt 36b. Der erste Abschnitt 36a des zweiten Anschlusselements 36 ist zum Zusammenwirken mit dem ersten Abschnitt 30a des ersten Anschlusselements 30a, 30b vorgesehen und umfasst einen ersten Abschnitt 58a einer Flugzeugbordküchenanschlusseinrichtung 58a, 58b, der komplementär zu dem an dem ersten Abschnitt 30a des ersten Anschlusselements 30 ausgebildeten ersten Abschnitt 52a der Flugzeugbordküchenanschlusseinrichtung 52a, 52b ausgebildet ist. Der erste Abschnitt 58a der Flugzeugbordküchenanschlusseinrichtung 58a, 58b umfasst einen elektrische Anschluss 104 der zum Zusammenwirken mit dem an dem ersten Abschnitt 30a des ersten Anschlusselements 30a, 30b ausgebildeten elektrischen Anschluss 66 vorgesehen ist. Ferner umfasst der erste Abschnitt 58a der Flugzeugbordküchenanschlusseinrichtung 58a, 58b einen Frischwasseranschluss 106 der zum Zusammenwirken mit dem an dem ersten Abschnitt 30a des ersten Anschlusselements 30a, 30b ausgebildeten Frischwasseranschluss 76 vorgesehen ist. Der erste Abschnitt 36a des zweiten Anschlusselements 36 ist mittels der Befestigungseinrichtung 40, die in Form eines L-Profils ausgeführt ist, in dem Fach 14 der Flugzeugbordküche befestigbar.

Der zweite Abschnitt 36b des zweiten Anschlusselements 36 ist zum Zusammenwirken mit dem zweiten Abschnitt 30b des ersten Anschlusselements 30a, 30b vorgesehen und umfasst einen zweiten Abschnitt 58b der Flugzeugbordküchenanschlusseinrichtung 58a, 58b, der komplementär zu dem an dem zweiten Abschnitt 30b des ersten Anschlusselements 30 ausgebildeten zweiten Abschnitt 52b der Flugzeugbordküchenanschlusseinrichtung 52a, 52b ausgebildet ist, siehe Figur 7. Der zweite Abschnitt 58b der Flugzeugbordküchenanschlusseinrichtung 58a, 58b umfasst einen Abwasseranschluss 108, der mittels eines in Form eines L-Profils ausgeführten Halteprofils 110 an der Bodenplatte 22 oder der Rückwand 38 des Fachs 14 der Flugzeugbordküche befestigbar ist.

Wie in Figur 8 zu erkennen ist, sind die Wände des Gehäuses 94 des ersten Abschnitts 30a des ersten Anschlusselements 30a, 30b im Bereich der zweiten und der dritten Seitenfläche 98, 100 des Gehäuses 94 verstärkt und bilden somit einen Teil der Verbindungseinrichtung 11, welche das erste und das zweite Bordküchengeräte 32, 34 in deren Position relativ zueinander sichert. Ferner umfasst die Verbindungseinrichtung 11 eine in den Figuren 5 und 9 gezeigte Haltestrebe 112. Die Haltestrebe 112 ist an dem ersten und dem zweiten Bordküchengerät 32, 34 befestigt und befindet sich im in dem Fach 14 der Flugzeugbordküche montierten Zustand des ersten und des zweiten Bordküchengeräts 32, 34 im Bereich einer einem Anwender zugänglichen Frontseite 114 des ersten und des zweiten Bordküchengeräts 32, 34. Die Haltestrebe 112 erstreckt sich im Wesentlichen parallel zu der Richtung y, d.h. im in dem Fach 14 der Flugzeugbordküche montierten Zustand des ersten und des zweiten Bordküchengeräts 32, 34 parallel zu der Bodenplatte 22 des Fachs 14. Darüber hinaus erstreckt sich die Haltestrebe 112 im Wesentlichen über die gesamte Breite des ersten und des zweiten Bordküchengeräts 32, 34 und grenzt an die Seitenflächen des Fachs 14 an.

Wie aus Figur 9 deutlich wird, ist die Haltestrebe 112 im Wesentlichen als Hohlkörper mit rechteckigem Querschnitt ausgebildet. Im Bereich einer Seitenwand 116, die im mit den Bordküchengeräten 32, 34 verbundenen Zustand der Haltestrebe 112 an der Frontseite der Bordküchengeräte 32, 34 anliegt, ist die Haltestrebe 112 verstärkt ausgebildet. Eine durch Verschrauben oder Verkleben der verstärkten Seitenwand 116 der Haltestrebe 112 mit dem ersten und zweiten Bordküchengeräten 32, 34 aus den Bordküchengeräten 32, 34 und der Haltestrebe 112 zusammengesetzte Strukturbaugruppe wird durch diese Ausgestaltung der Haltestrebe 112 besonders effektiv verstärkt und/oder versteift.

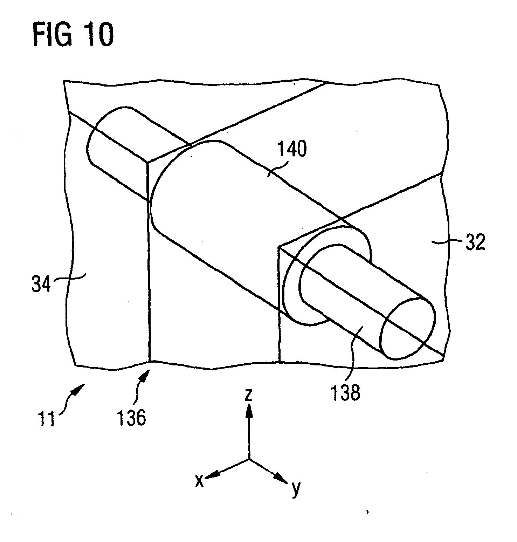

Die Verbindungseinrichtung 11 des Schnittstellensystems 10 umfasst ferner eine Haltevorrichtung 136. Wie in Figur 10 näher dargestellt, umfasst die Haltevorrichtung 136 einen Verbindungsstift 138 und einen Abstandshalter 140. Der Verbindungsstift 138 ist an seinem ersten Ende mit dem ersten Bordküchengerät 32 und an seinem zweiten Ende mit dem zweiten Bordküchengerät 34 verbunden. Der Verbindungsstift 138 ist beispielsweise in einer an den Bordküchengeräten 32, 34 vorgesehenen Ausnehmung aufgenommen und mit den Bordküchengeräten 32, 34 verschraubt oder verklebt. Die Haltevorrichtung 136 verbindet das erste Bordküchengerät 32 mit dem zweiten Bordküchengerät 34 und hält das erste Bordküchengerät 32 anhand des Abstandshalters 140 in einem gewünschten Abstand von dem zweiten Bordküchengerät 34.

Wie in Figur 5 dargestellt, erstreckt sich von der ersten Befestigungseinrichtung 40 ein zylinderförmiger Führungsvorsprung 42 entlang der Richtung x. Der Führungsvorsprung 42 ist dazu vorgesehen, in einer Führungsöffnung 44 aufgenommen zu werden, die in der ersten Seitenfläche 96 des Gehäuses 94 des ersten Abschnitts 30a des ersten Anschlusselements 30a, 30b ausgebildet ist. Der Führungsvorsprung 42 und die Führungsöffnung 44 bilden einen Teil des Montagesystems 15, welches das erste und das zweite Bordküchengerät 32, 34 in deren Position relativ zu dem Fach 14 sichert.

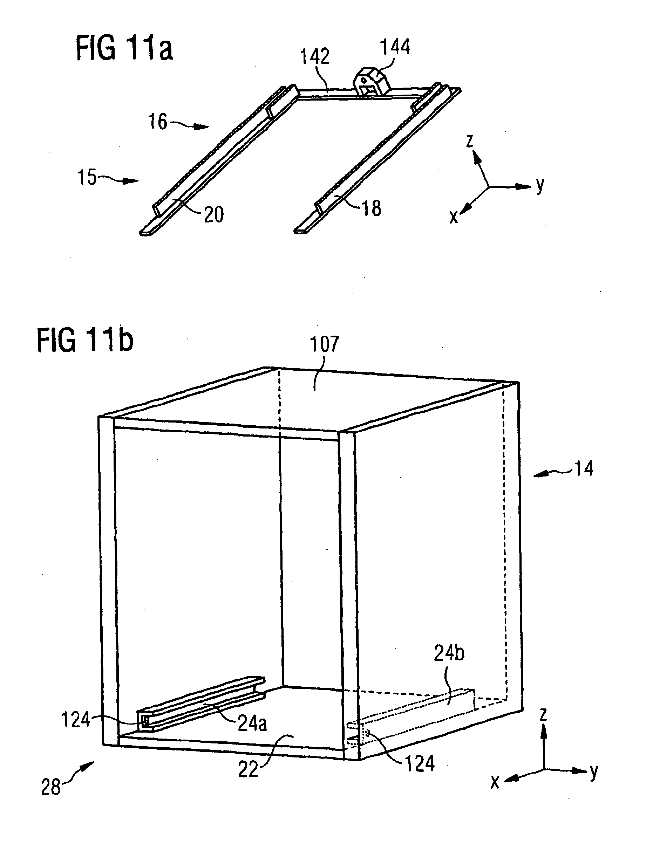

Ferner umfasst das Montagesystem 15 eine in Figur 11a gezeigte erste Montageeinrichtung 16 mit zwei ersten Führungsschienen 18, 20, die durch einen Verbindungsabschnitt 142 miteinander verbunden sind. Die U-förmige Struktur der ersten Montageeinrichtung 16 hat den Vorteil, dass durch Befestigen der Führungsschiene 18 an dem ersten Bordküchengerät 32 und durch Befestigen der Führungsschiene 20 an dem zweiten Bordküchengerät 34 die Bordküchengeräte 32, 34 anhand des Verbindungsabschnitts 142 zusätzlich in ihrer Position relativ zueinander gesichert werden. Der Verbindungsabschnitt 142 weist ferner eine Haltestruktur 144 auf, die sich von dem Verbindungsabschnitt 142 weg erstreckt und dazu eingerichtet ist, den Abwasserverteiler 82 des zweiten Abschnitts 30b des ersten Anschlusselements 30 aufzunehmen. Die ersten Führungsschienen 18, 20 der ersten Montageeinrichtung 16 sind dazu vorgesehen, mit zwei zweiten Führungsschienen 24a, 24b der zweiten Montageeinrichtung 28 des Montagesystems 15 zusammenzuwirken, siehe Figur 11b. Die zweiten Führungsschienen 24a, 24b der zweiten Montageeinrichtung 28 sind an der Bodenplatte 22 des Fachs 14 der Flugzeugbordküche befestigt und erstrecken sich, ebenso wie die ersten Führungsschienen 18, 20 der ersten Montageeinrichtung 16, in Richtung x.

Ferner umfasst das Montagesystem 15 ein Sicherungssystem mit einer der ersten Montageeinrichtung 16 zugeordneten ersten Sicherungseinrichtung 26 sowie einer der zweiten Montageeinrichtung 28 zugeordneten zweiten Sicherungseinrichtung 27. In einer ersten Ausführungsform des Sicherungssystems ist die erste Sicherungseinrichtung 26 in der in Figur 9 detailliert veranschaulichten Haltestrebe 112 aufgenommen und umfasst ein federnd in seine Verriegelungsstellung vorgespanntes erstes Verriegelungselement 118. Das erste Verriegelungselement 118 umfasst zwei zylinderförmige Sicherungsstifte, die in einer Umhausung 122 verschiebbar aufgenommen sind. Die Umhausung 122 ist in einem Kantenbereich der Haltestrebe 112 angeordnet. Das erste Verriegelungselement 118 kann durch Verschieben der Sicherungsstifte in Richtung y zwischen einer Verriegelungsstellung und einer Entriegelungsstellung verstellt werden. Wenn sich das erste Verriegelungselement 118, wie in Figur 9 gezeigt, in seiner Entriegelungsstellung befindet, sind die Sicherungsstifte in der Umhausung 122 aufgenommen. Wenn sich das erste Verriegelungselement 118 dagegen in seiner Verriegelungsstellung befindet, ragen die Sicherungsstifte aus der Umhausung 122 heraus und können mit einem zweiten Verriegelungselement 124 einer der zweite Montageeinrichtung 28 zugeordneten zweiten Sicherungseinrichtung 27 zusammenwirken. Das zweite Verriegelungselement 124 der zweiten Sicherungseinrichtung 27 umfasst zwei in den zweiten Führungsschienen 24a, 24b ausgebildete Bohrungen, siehe Figuren 9 und 11b. Wenn sich das erste Verriegelungselement 118 in seiner Verriegelungsstellung befindet, sind die Sicherungsstifte in den Bohrungen des zweiten Verriegelungselements 124 aufgenommen, wodurch eine unerwünschte Verschiebung der Bordküchengeräte 32, 34 in dem Fach 14 der Flugzeugbordküche sicher unterbunden wird.

Die erste Sicherungseinrichtung 26 der ersten Montageeinrichtung 16 umfasst ferner ein Betätigungselement 126 zum Verstellen des ersten Verriegelungselements 118 zwischen seiner Verriegelungsstellung und seiner Entriegelungsstellung. Das Betätigungselement 126 ist über ein in Figur 9 nicht näher dargestelltes Verbindungselement mit dem ersten Verriegelungselement 118 verbunden und um eine Achse 128 zwischen einer unbetätigten Stellung und einer Betätigungsstellung verschwenkbar, wobei das Betätigungselement 126 in seiner Betätigungsstellung das erste Verriegelungselement 118 entgegen der von der Feder auf das erste Verriegelungselement 118 aufgebrachten Kraft in seiner Entriegelungsstellung hält und in seiner unbetätigten Stellung das erste Verriegelungselement 118 in seiner Verrieglungsstellung hält und/oder belässt. Die Achse 128 ist in der Richtung y orientiert und in einer Kante der Haltestrebe 112 aufgenommen. Das Betätigungselement 126 erstreckt sich in der Richtung y im Wesentlichen über die Länge der Haltestrebe 112 und damit im Wesentlichen die gesamte Breite der Frontseite 114 des ersten und des zweiten Bordküchengeräts 32, 34.

In seiner unbetätigten Stellung liegt das Betätigungselement 126 an einer Seitenfläche 132 der Haltestrebe 112 an und erstreckt sich somit im Wesentlichen parallel zu der Seitenfläche 132 der Haltestrebe 112 und damit der Frontseite 114 der Bordküchengeräte 32, 34. In seiner in Figur 9 gezeigte Betätigungsstellung ist das Betätigungselement 126 dagegen in Richtung z nach oben geklappt und erstreckt sich in einem Winkel von ca. 60° zu der Seitenfläche 132 der Haltestrebe 112 und folglich der Frontseite 114 der Bordküchengeräte 32, 34. In seiner Betätigungsstellung kann es als Griff genutzt werden, beispielsweise um die Bordküchengeräte 32, 34 aus dem Fach 14 der Flugzeugbordküche herauszuziehen.

Figur 12 zeigt ein weiteres Ausführungsbeispiel eines Sicherungssystems mit einer ersten und einer zweiten Sicherungseinrichtung 26, 27. Insbesondere zeigt Figur 12 im Bereich einer Seitenwand des Bordküchengeräts 32 angeordnete Komponenten der ersten und der zweiten Sicherungseinrichtung 26, 27. Im Bereich einer der Seitenwand des Bordküchengeräts 32 gegenüberliegenden Seitenwand des Bordküchengeräts 34 sind weitere Komponenten der ersten und der zweite Sicherungseinrichtung 26, 27 vorgesehen, die identisch zu den in Figur 12 veranschaulichten Bauteilen ausgestaltet sind.

Die erste Sicherungseinrichtung 26 umfasst ein anhand eines ersten Drehlagers 146 drehbar gelagertes erstes Verriegelungselement 118. Ein Federelement 148 stützt sich an einem unbeweglichen Teil 150 ab und übt eine Druckkraft auf einen drehbeweglichen Teil 152 des ersten Verriegelungselements 118 auf, wodurch das erste Verriegelungselement 118 in seine Verriegelungsstellung vorgespannt wird. Das erste Verriegelungselement 118 umfasst ferner ein Hakenprofil 154 und eine Führungsschräge 156. Die zweite Sicherungseinrichtung 27 ist in einem unteren Bereich einer Seitenwand des Fachs 14 der Flugzeugbordküchen anbringbar und umfasst ein zweites Verriegelungselement 124 mit einem an das Hakenprofil 154 des ersten Verriegelungselements 118 angepassten Verriegelungsvorsprung 158, welcher sich im in dem Fach 14 der Flugzeugbordküche montierten Zustand der zweiten Sicherungseinrichtung 27 des ersten Verriegelungselements 118 in das Fach 14 der Flugzeugbordküche erstreckt.

Beim Einschieben der Bordküchengeräte 32, 34 in das Fach 14 der Flugzeugbordküche drückt der Verriegelungsvorsprung 158 des zweiten Verriegelungselements 124 auf die Führungsschräge 156 des ersten Verriegelungselements 118 und bewegt somit das erste Verriegelungselement 118 entgegen der Kraft der Feder 148 in dessen Entriegelungsstellung. Wenn die Bordküchengeräte 32, 34 ihre vorgesehene Position in dem Fach 14 der Flugzeugbordküchen erreicht haben, befindet sich der Verriegelungsvorsprung 158 in einer Position, die es ermöglicht, dass sich das erste Verriegelungselement 118 infolge seiner federnden Vorspannung in seine Verriegelungsstellung bewegen und das Hakenprofil 154 des ersten Verriegelungselements 118 den Verriegelungsvorsprung 158 hintergreifen kann. Das erste Verriegelungselement 118 und das zweite Verriegelungselement 124 verrasten bei der Montage der Bordküchengeräte 32, 34 in dem Fach 14 der Flugzeugbordküche somit selbsttätig miteinander.

Ein Betätigungselement 126 der ersten Sicherungseinrichtung 26 ist im Bereich der Frontseite 114 der Bordküchengeräte 32, 34 angeordnet und anhand eines zweiten Drehlagers 160 drehbar gelagert. Das Betätigungselement 126 ist über ein starres, sich entlang des unteren Randes der Seitenfläche des Bordküchengerätes 32 erstreckendes und innerhalb eines Gestängeschachts verschiebbar gelagertes Verbindungselement 134 mit dem ersten Verriegelungselement 118 verbunden. Eine Betätigung des Betätigungselements 126 erfolgt durch manuelles Herausklappen des Betätigungselements 126. Dabei beschreibt des Betätigungselements 126 eine Drehbewegung in der x-z-Ebene um das zweite Drehlager 160. Eine an dem Betätigungselement 126 ausgebildete Betätigungsnase 164, welche in eine erste Gestängenut 166 des Verbindungselements 134 greift, bewirkt dabei eine Verschiebung des Verbindungselements 134 entlang der Richtung x. Eine zweite Gestängenut 168 des Verbindungselements 134, welche einen Hebelarm 170 des ersten Verriegelungselements 118 umgreift, bewirkt bei einer Verschiebung des Verbindungselements 134 eine Drehbewegung des ersten Verriegelungselements 118 in der x-z-Ebene um das erste Drehlager 146. Dadurch wird das erste Verriegelungselement 118 entgegen der Federspannung des Federelements 148 in seine Entriegelungsstellung verstellt.

Das Schnittstellensystem 10 kann lediglich ein in Figur 9 gezeigtes Sicherungssystem oder lediglich ein in Figur 12 gezeigtes Sicherungssystem umfassen. Es ist jedoch auch möglich, das Schnittstellensystem 10 sowohl mit einem in Figur 9 gezeigten Sicherungssystem als auch mit einem in Figur 12 gezeigten Sicherungssystem auszustatten.

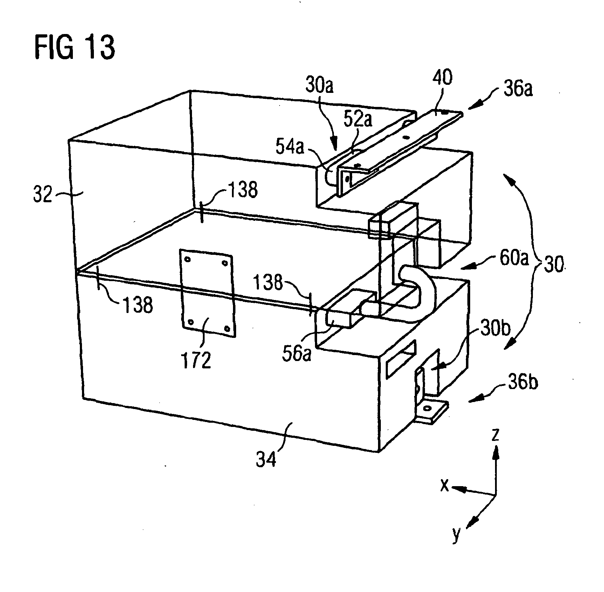

Figur 13 zeigt ein weiteres Ausführungsbeispiel eines Schnittstellensystems 10, wobei das erste Anschlusselement 30 des Schnittstellensystems 10 mit zwei übereinander angeordneten Bordküchengeräten 32, 34 zu einem Gerätemodul verbundenen ist. Um in dem in Figur 13 gezeigten Ausführungsbeispiel die Bordküchengeräte 32, 34 in ihrer Position relativ zueinander zu sichern, umfasst die Verbindungseinrichtung 11 des Schnittstellensystems 10 eine Befestigungsplatte 172, die an dem ersten und dem zweiten Bordküchengerät 32, 34 befestigt ist und in dem in dem Fach 14 der Flugzeugbordküche montierten Zustand des ersten und des zweiten Bordküchengeräts 32, 34 im Bereich einer einer Seitenfläche des Fachs 14 zugewandten Seitenflächen des ersten und des zweiten Bordküchengeräts 32, 34 angeordnet ist.

Der erste Abschnitt 30a des ersten Anschlusselement 30 umfasst einen ersten Abschnitt 52a einer Flugzeugbordküchenanschlusseinrichtung, der lediglich mit einem ersten Abschnitt 54a einer ersten Geräteanschlusseinrichtung direkt verbunden ist. Der erste Abschnitt 60a des Verteilersystems ist so gestaltet, dass er den direkt mit dem ersten Abschnitt 52a der Flugzeugbordküchenanschlusseinrichtung verbundenen ersten Abschnitt 54a der ersten Geräteanschlusseinrichtung mit einem nicht unmittelbar an den ersten Abschnitt 52a der Flugzeugbordküchenanschlusseinrichtung angeschlossenen ersten Abschnitt 56a einer zweiten Geräteanschlusseinrichtung verbindet. In ähnlicher Weise umfasst der in Figur 13 nicht detailliert veranschaulichte zweite Abschnitt 30b des ersten Anschlusselement 30 einen zweiten Abschnitt der Flugzeugbordküchenanschlusseinrichtung, der lediglich mit einem zweiten Abschnitt der zweiten Geräteanschlusseinrichtung direkt verbunden ist. Der zweite Abschnitt des Verteilersystems ist so gestaltet, dass er den direkt mit dem zweiten Abschnitt der Flugzeugbordküchenanschlusseinrichtung verbundenen zweiten Abschnitt der zweiten Geräteanschlusseinrichtung mit einem nicht unmittelbar an den zweiten Abschnitt der Flugzeugbordküchenanschlusseinrichtung angeschlossenen zweiten Abschnitt der ersten Geräteanschlusseinrichtung verbindet.

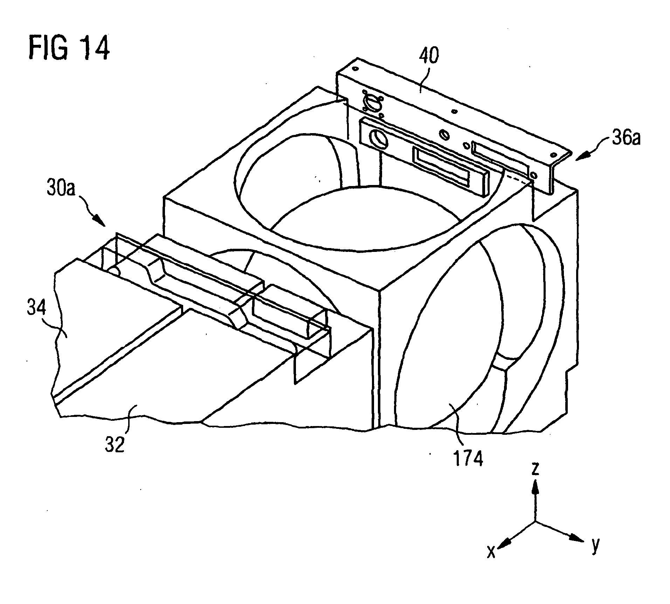

Figur 14 zeigt ein weiteres alternatives Ausführungsbeispiel eines Gerätemoduls. In diesem Fall umfasst das Gerätemodul drei Bordküchengeräte 32, 34, 174, wobei das erste und das zweite Bordküchengeräte 32, 34 zur Anordnung nebeneinander in einem der Fachöffnung zugewandten vorderen Bereich des Fachs 14 der Flugzeugbordküche vorgesehen sind. Das dritte Bordküchengerät 174 ist dagegen zur Anordnung in einem von der Fachöffnung abgewandten hinteren Bereich des Fachs 14 vorgesehen. Eine derartige Konfiguration des Gerätemoduls eignet sich bevorzugt für den Fall, in dem es nicht gewünscht oder nicht erforderlich ist, das dritte Bordküchengerät 174 für einen Anwender direkt zugänglich zu machen. Beispielsweise kann es sich bei dem dritten Bordküchengerät 174 um einen Wassererhitzer handeln, der unter anderem dazu eingerichtet ist, Frischwasser von der Flugzeugbordküche zu beziehen, dieses zu erhitzen und anschließend dem ersten und dem zweiten Bordküchengeräten 32, 34 zuzuführen. Das dritte Bordküchengerät 174 ist in einer rahmenförmigen Haltestruktur 176 angeordnet, die es ermöglicht den ersten Abschnitt 30a des ersten Anschlusselements 30 über entsprechende Leitungen mit dem ersten Abschnitt 36a des zweiten Anschlusselements 36 zu verbinden.

## Patentansprüche

1. Schnittstellensystem (10) zur Verwendung in einer Flugzeugbordküche mit:
- einem ersten Anschlusselement (30), das über eine erste Geräteanschlusseinrichtung (54a, 54b) mit einem internen elektrischen System, einem internen Frischwasserversorgungssystem und/oder einem internen Abwasserentsorgungssystem eines ersten Bordküchengeräts (32) verbindbar ist und über eine zweite Geräteanschlusseinrichtung (56a, 56b) mit einem internen elektrischen System, einem internen Frischwasserversorgungssystem und/oder einem internen Abwasserentsorgungssystem eines zweiten Bordküchengeräts (34) verbindbar ist, und das über eine Flugzeugbordküchenanschlusseinrichtung (52a, 52b) mit einer komplementären Flugzeugbordküchenanschlusseinrichtung (58a, 58b) eines in einem Fach (14) der Flugzeugbordküche befestigbaren zweiten Anschlusselements (36) des Schnittstellensystems (10) verbindbar ist, um das erste Anschlusselement (30) mit einem elektrischen System, einem Frischwasserversorgungssystem und/oder einem Abwasserentsorgungssystem der Flugzeugbordküche zu verbinden, wobei das erste Anschlusselement (30) ferner ein Verteilersystem (60a, 60b) umfasst, das die Flugzeugbordküchenanschlusseinrichtung (52a, 52b) des ersten Anschlusselements (30) mit der ersten und der zweiten Geräteanschlusseinrichtung (54a, 54b, 56a, 56b) des ersten Anschlusselements (30) verbindet.

2. Schnittstellensystem nach Anspruch 1,
**dadurch gekennzeichnet, dass** das Verteilersystern (60a, 60b) des ersten Anschlusselements (30) umfasst:
- einen Stromverteiler (62), der einen elektrischen Anschluss (66) der Flugzeugbordküchenanschlusseinrichtung (52a, 52b) des ersten Anschlusselements (30) mit elektrischen Anschlüssen (68, 70) der ersten und der zweiten Geräteanschfusseinrichtung (54a, 54b, 56a, 56b) des ersten Anschlusselements (30) verbindet,
- einen Frischwasserverteiler (72), der einen Frischwasseranschluss (76) der Flugzeugbordküchenanschlusseinrichtung (52a, 52b) des ersten Anschlusselements (30) mit Frischwasseranschlüssen (78, 80) der ersten und der zweiten Geräteanschlusseinrichtung (54a, 54b, 56a, 56b) des ersten Anschlusselements (30) verbindet, und/oder
- einen Abwasserverteiler (82), der Abwasseranschlüsse (88, 90) der ersten und der zweiten Geräteanschlusseinrichtung (54a, 54b, 56a, 56b) des ersten Anschlusselements (30) mit einem Abwasseranschluss (86) der Flugzeugbordküchenanschlusseinrichtung (52a, 52b) des ersten Anschlusselements (30) verbindet.

3. Schnittstellensystem nach Anspruch 1 oder 2,
**dadurch gekennzeichnet, dass** die Frischwasseranschlüsse (78, 80) der ersten und der zweiten Geräteanschlusseinrichtung (54a, 54b, 56a, 56b) des ersten Anschlusselements (30) in einem ersten Abschnitt (30a) des ersten Anschlusselements (30) angeordnet sind, und dass die Abwasseranschlüsse (88, 90) der ersten und der zweiten Geräteanschlusseinrichtung (54a, 54b, 56a, 56b) des ersten Anschlusselements (30) in einem separat von dem ersten Abschnitt (30a) des ersten Anschlusselements (30) ausgebildeten zweiten Abschnitt (30b) des ersten Anschlusselement (30) angeordnet sind.

4. Schnittstellensystem nach einem der Ansprüche 1 bis 3,
**gekennzeichnet durch** eine Verbindungseinrichtung (11), die dazu eingerichtet ist, das erste und das zweite Bordküchengerät (32, 34) in deren Position relativ zueinander zu sichern.

5. Schnittstellensystem nach Anspruch 4,
**dadurch gekennzeichnet, dass** die Verbindungseinrichtung (11) umfasst:
- eine das erste und das zweite Bordküchengerät (32, 34) aufnehmende Trägerstruktur (12),
- einen Abschnitt (98, 100) eines Gehäuses (94) des ersten Anschlusselements (30), an dem das erste und das zweite Bordküchengerät (32 ,34) befestigbar sind,
- eine Haltevorrichtung (136) mit einem mit dem ersten und dem zweiten Bordküchengerät (32, 34) verbindbaren Verbindungsstift (138) sowie einem von dem Verbindungsstift (138) getragenen Abstandshalter (140),
- eine Haltestrebe (112), an der das erste und das zweite Bordküchengerät (32 ,34) befestigbar sind, wobei die Haltestrebe (112) im in dem Fach (14) der Flugzeugbordküche montierten Zustand des ersten und des zweiten Bordküchengeräts (32, 34) im Bereich einer einem Nutzer zugänglichen Frontseite (114) des ersten und des zweiten Bordküchengeräts (32 ,34) angeordnet ist und sich im Wesentlichen parallel zu einer Bodenplatte (22) des Fachs (14) erstreckt, und/oder
- eine Befestigungsplatte (172), an der das erste und das zweite Bordküchengerät (32, 34) derart befestigbar sind, dass die Befestigungsplatte (172) im in dem Fach (14) der Flugzeugbordküche montierten Zustand des ersten und des zweiten Bordküchengeräts (32 ,34) im Bereich von einer Seitenfläche des Fachs zugewandten Seitenflächen des ersten und des zweiten Bordküchengeräts (32 ,34) angeordnet ist.

6. Schnittstellensystem nach einem der Ansprüche 1 bis 5,
**gekennzeichnet durch** ein Montagesystem (15), mit einer ersten Montageeinrichtung (16), die mit dem ersten und/oder dem zweiten Bordküchengerät (32, 34) verbindbar ist, und einer zu der ersten Montageeinrichtung (16) komplementären zweiten Montageeinrichtung (28), die in dem Fach (14) der Flugzeugbordküche befestigbar und dazu eingerichtet ist, mit der ersten Montageeinrichtung (16) zusammenzuwirken, um das erste und das zweite Bordküchengerät (32, 34) in deren Position relativ zu dem Fach (14) zu sichern.

7. Schnittstellensystem nach Anspruch 6,
**dadurch gekennzeichnet, dass** das Montagesystem (15) umfasst:
- eine erste Führungsschiene (18, 20) der ersten Montageeinrichtung (16), die dazu eingerichtet ist, bei der Montage der Bordküchengeräte (32, 34) in dem Fach (14) der Flugzeugbordküche sowie in einem in dem Fach (14) der Flugzeugbordküche montierten Zustand der Bordküchengeräte (32, 34) mit einer zweiten Führungsschiene (24, 24a, 24b) der zweiten Montageeinrichtung (28) zusammenzuwirken,
- einen Führungsvorsprung (42), der sich von dem ersten Anschlusselement (30) oder einer Befestigungseinrichtung (40) zur Befestigung des zweiten Anschlusselements (36) in dem Fach (14) der Flugzeugbordküche erstreckt, und dazu eingerichtet ist, in einer zu dem Führungsvorsprung (42) komplementären Führungsöffnung (44) aufgenommen zu werden, die in der Befestigungseinrichtung (40) zur Befestigung des zweiten Anschlusselements (36) in dem Fach (14) der Flugzeugbordküche oder dem ersten Anschlusselement (30) ausgebildet ist, und/oder
- eine mit dem ersten und/oder dem zweiten Bordküchengerät (32, 34) verbindbare erste Sicherungseinrichtung (26) der ersten Montageeinrichtung (16) sowie eine zu der ersten Sicherungseinrichtung (26) der ersten Montageeinrichtung (16) komplementäre zweite Sicherungseinrichtung (27) der zweiten Montageeinrichtung (28), wobei die zweite Sicherungseinrichtung (27) der zweiten Montageeinrichtung (28) dazu eingerichtet ist, bei der Montage der Bordküchengeräte (32, 34) in dem Fach (14) der Flugzeugbordküche mit der ersten Sicherungseinrichtung (26) zusammenzuwirken, um die Bordküchengeräte (32, 34) in ihrer Position in dem Fach (14) der Flugzeugbordküche zu sichern.

8. Schnittstellensystem nach Anspruch 7,
**dadurch gekennzeichnet, dass** die erste Sicherungseinrichtung (26) der ersten Montageeinrichtung (16) ein federnd in seine Verriegelungsstellung vorgespanntes erstes Verriegelungselement (118) und die zweite Sicherungseinrichtung (27) der zweiten Montageeinrichtung (28) ein zweites Verriegelungselement (124) umfasst, wobei das erste Verriegelungselement (118) dazu eingerichtet ist, bei der Montage der Bordküchengeräte (32, 34) in dem Fach (14) der Flugzeugbordküche mit dem zweiten Verriegelungselement (124) zu verrasten, wenn sich die Bordküchengeräte (32, 34) in einer gewünschten Position in dem Fach (14) der Flugzeugbordküche befinden.

9. Schnittstellensystem nach Anspruch 7 oder 8,
**dadurch gekennzeichnet, dass** die erste Sicherungseinrichtung (26) der ersten Montageeinrichtung (16) ferner ein Betätigungselement (126) zum Bewegen des ersten Verriegelungselements (118) zwischen seiner Verriegelungsstellung und seiner Entriegelungsstellung umfasst, wobei das Betätigungselement (126) insbesondere über ein Verbindungselement (134) mit dem ersten Verriegelungselement (118) verbunden ist.

10. Schnittstellensystem nach Anspruch 9,
**dadurch gekennzeichnet, dass** das Betätigungselement (126) zwischen einer unbetätigten Stellung und einer Betätigungsstellung bewegbar und dazu eingerichtet ist, in seiner betätigten Stellung das erste Verriegelungselement (118) in seiner Verriegelungsstellung oder seiner Entriegelungsstellung zu halten.

11. Schnittstellensystem nach Anspruch 9 oder 10,
**dadurch gekennzeichnet, dass** sich das Betätigungselement (126) im mit dem ersten und/oder dem zweiten Bordküchengerät (32, 34) verbundenen Zustand der ersten Sicherungseinrichtung (26) der ersten Montageeinrichtung (16) in seiner Betätigungsstellung in einem Winkel von 30 bis 90° zu einer Seitenfläche des ersten und/oder des zweiten Bordküchengeräts (32, 34) erstreckt und/oder dass sich das Betätigungselement (126) im mit dem ersten und/oder dem zweiten Bordküchengerät (32, 34) verbundenen Zustand der ersten Sicherungseinrichtung (26) der ersten Montageeinrichtung (16) in seiner unbetätigten Stellung im Wesentlichen parallel zu der Frontseite (114) des ersten und/oder des zweiten Bordküchengeräts (32, 34) erstreckt.

12. Gerätemodul für eine Flugzeugbordküche, mit:
- einem ersten und einem zweiten Bordküchengerät (32, 34), die mit dem ersten Anschlusselement (30) des Schnittstellensystems (10) nach einem der Ansprüche 1 bis 11 verbunden sind, wobei ein internes elektrisches System, ein internes Frischwasserversorgungssystem und/oder ein internes Abwasserentsorgungssystem der Bordküchengeräte (32, 34) mit den Geräteanschlusseinrichtungen (54a, 54b, 56a, 56b) des ersten Anschlusselements (30) des Schnittstellensystems (10) verbunden ist/sind.

13. Gerätemodul nach Anspruch 12,
**dadurch gekennzeichnet, dass** das erste und das zweite Bordküchengerät (32, 34) bezogen auf eine Längsachse (L) nebeneinander, übereinander und/oder hintereinander angeordnet sind.

14. Verfahren zur Montage eines ersten und eines zweiten Bordküchengeräts (32, 34) in einer Flugzeugbordküche mit den Schritten:
- Verbinden des ersten und des zweiten Bordküchengeräts (32, 34) mit dem ersten Anschlusselement (30) eines Schnittstellensystems (10) nach einem der Ansprüche 1 bis 11,
- Befestigen des zweiten Anschlusselements (36) des Schnittstellensystems (10) in einem Fach (14) der Flugzeugbordküche,
- Einbringen der mit dem ersten Anschlusselement (30) des Schnittstellensystems (10) verbundenen Bordküchengeräte (32, 34) in das Fach (14) der Flugzeugbordküche, und
- Verbinden der Flugzeugbordküchenanschlusseinrichtung (52a, 52b) des ersten Anschlusselements (30) des Schnittstellensystems (10) mit der Flugzeugbordküchenanschlusseinrichtung (58a, 58b) des zweiten Anschlusselements (36) des Schnittstellensystems (10), um das erste Anschlusselement (30) mit einem elektrischen System, einem Frischwasserversorgungssystem und/oder einem Abwasserentsorgungssystem der Flugzeugbordküche zu verbinden, wobei ein Verteilersystem (60a, 60b) des ersten Anschlusselements (30) die Flugzeugbordküchenanschlusseinrichtung (52a, 52b) des ersten Anschlusselements (30) mit der ersten und der zweiten Geräteanschlusseinrichtung (54a, 54b, 56a, 56b) des ersten Anschlusselements (30) verbindet.

15. Verfahren nach Anspruch 14,
**dadurch gekennzeichnet, dass** das erste und das zweite Bordküchengerät (32, 34) vor dem Einbringen der Bordküchengeräte (32, 34) in das Fach (14) der Flugzeugbordküche mittels einer Verbindungseinrichtung (11) in ihrer Position relativ zueinander gesichert werden.

## Claims

1. Interface system (10) for use in an aircraft galley having:
- a first connection element (30) which is connectable via a first appliance connection device (54a, 54b) to an internal electrical system, an internal freshwater supply system and/or an internal wastewater disposal system of a first galley appliance (32), and is connectable via a second appliance connection device (56a, 56b) to an internal electrical system, an internal freshwater supply system and/or an internal wastewater disposal system of a second galley appliance (34), and which is connectable via an aircraft galley connection device (52a, 52b) to a complementary aircraft galley connection device (58a, 58b) of a second connection element (36) of the interface system (10), which second connection element (36) is fastenable in a compartment (14) of the aircraft galley, in order to connect the first connection element (30) to an electrical system, a freshwater supply system and/or a wastewater disposal system of the aircraft galley, the first connection element (30) further comprising a distributor system (60a, 60b) which connects the aircraft galley connection device (52a, 52b) of the first connection element (30) to the first and the second appliance connection device (54a, 54b, 56a, 56b) of the first connection element (30).

2. Interface system according to Claim 1,
**characterised in that** the distributor system (60a, 60b) of the first connection element (30) comprises:
- a current distributor (62) which connects an electrical connection (66) of the aircraft galley connection device (52a, 52b) of the first connection element (30) to electrical connections (68, 70) of the first and the second appliance connection device (54a, 54b, 56a, 56b) of the first connection element (30),
- a freshwater distributor (72) which connects a freshwater connection (76) of the aircraft galley connection device (52a, 52b) of the first connection element (30) to freshwater connections (78, 80) of the first and the second appliance connection device (54a, 54b, 56a, 56b) of the first connection element (30), and/or
- a wastewater distributor (82) which connects wastewater connections (88, 90) of the first and the second appliance connection device (54a, 54b, 56a, 56b) of the first connection element (30) to a wastewater connection (86) of the aircraft galley connection device (52a, 52b) of the first connection element (30).

3. Interface system according to Claim 1 or 2,
**characterised in that** the freshwater connections (78, 80) of the first and the second appliance connection device (54a, 54b, 56a, 56b) of the first connection element (30) are arranged in a first section (30a) of the first connection element (30), and **in that** the wastewater connections (88, 90) of the first and the second appliance connection device (54a, 54b, 56a, 56b) of the first connection element (30) are arranged in a second section (30b) of the first connection element (30) formed separately from the first section (30a) of the first connection element (30).

4. Interface system according to one of Claims 1 to 3,
**characterised by** a connecting device (11) which is configured to secure the first and the second galley appliance (32, 34) in their position relative to one another.

5. Interface system according to Claim 4,
**characterised in that** the connecting device (11) comprises:
- a carrier structure (12) receiving the first and the second galley appliance (32, 34),
- a section (98, 100) of a housing (94) of the first connection element (30) to which the first and the second galley appliance (32, 34) are fastenable,
- a holding device (136) with a connecting pin (138) which is connectable to the first and the second galley appliance (32, 34) and with a spacer (140) carried by the connecting pin (138),
- a holding strut (112), to which the first and the second galley appliance (32, 34) are fastenable, the holding strut (112) being arranged in the region of a front side (114), accessible to a user, of the first and the second galley appliance (32, 34) and extending substantially parallel to a bottom plate (22) of the compartment (14), when the first and the second galley appliance (32, 34) are mounted in the compartment (14) of the aircraft galley, and/or
- a fixing plate (172), to which the first and the second galley appliance (32, 34) are fastenable in such a way that the fixing plate (172) is arranged in the region of lateral surfaces of the first and the second galley appliance (32, 34) facing a lateral surface of the compartment, when the first and the second galley appliance (32, 34) are mounted in the compartment (14) of the aircraft galley.

6. Interface system according to one of Claims 1 to 5,
**characterised by** a mounting system (15) with a first mounting device (16) which is connectable to the first and/or the second galley appliance (32, 34), and a second mounting device (28) which is complementary to the first mounting device (16), fastenable in the compartment (14) of the aircraft galley and is configured to cooperate with the first mounting device (16), in order to secure the first and the second galley appliance (32, 34) in their position relative to the compartment (14).

7. Interface system according to Claim 6,
**characterised in that** the mounting system (15) comprises:
- a first guide rail (18, 20) of the first mounting device (16) which is configured to cooperate with a second guide rail (24, 24a, 24b) of the second mounting device (28) on the mounting of the galley appliances (32, 34) in the compartment (14) of the aircraft galley and when the galley appliances (32, 34) are mounted in the compartment (14) of the aircraft galley,
- a guide projection (42) which extends from the first connection element (30) or from a fixing device (40) for fixing the second connection element (36) in the compartment (14) of the aircraft galley, and is configured to be received in a guide opening (44) complementary to the guide projection (42) and formed in the fixing device (40) for fixing the second connection element (36) in the compartment (14) of the aircraft galley or in the first connection element (30), and/or
- a first securing device (26); which is connectable to the first and/or the second galley appliance (32, 34), of the first mounting device (16) and a second securing device (27) of the second mounting device (28) which is complementary to the first securing device (26) of the first mounting device (16), the second securing device (27) of the second mounting device (28) being configured to cooperate with the first securing device (26) on the mounting of the galley appliances (32, 34) in the compartment (14) of the aircraft galley, in order to secure the galley appliances (32, 34) in their position in the compartment (14) of the aircraft galley.

8. Interface system according to Claim 7,
**characterised in that** the first securing device (26) of the first mounting device (16) comprises a first latching element (118) spring-biased into its latching position and the second securing device (27) of the second mounting device (28) comprises a second latching element (124), the first latching element (118) being configured to engage with the second latching element (124) on the mounting of the galley appliances (32, 34) in the compartment (14) of the aircraft galley, when the galley appliances (32, 34) are situated in a desired position in the compartment (14) of the aircraft galley.

9. Interface system according to Claim 7 or 8,
**characterised in that** the first securing device (26) of the first mounting device (16) further comprises an actuating element (126) for moving the first latching element (118) between its latching position and its unlatching position, the actuating element (126) being connected to the first latching element (118), in particular via a connecting element (134).

10. Interface system according to Claim 9,
**characterised in that** the actuating element (126) is movable between an unactuated position and an actuating position and is configured to keep, in its actuated position, the first latching element (118) in its latching position or its unlatching position.

11. Interface system according to Claim 9 or 10,
**characterised in that** the actuating element (126) extends in its actuating position at an angle of 30 to 90° to a lateral surface of the first and/or the second galley appliance (32, 34) when the first securing device (26) of the first mounting device (16) is connected to the first and/or the second galley appliance (32, 34), and/or **in that** the actuating element (126) extends in its unactuated position substantially parallel to the front side (114) of the first and/or the second galley appliance (32, 34) when the first securing device (26) of the first mounting device (16) is connected to the first and/or the second galley appliance (32, 34).

12. Appliance module for an aircraft galley, having:
- a first and a second galley appliance (32, 34) which are connected to the first connection element (30) of the interface system (10) according to one of Claims 1 to 11, an internal electrical system, an internal freshwater supply system and/or an internal wastewater disposal system of the galley appliances (32, 34) being connected to the appliance connection devices (54a, 54b, 56a, 56b) of the first connection element (30) of the interface system (10).

13. Appliance module according to Claim 12,
**characterised in that** the first and the second galley appliance (32, 34) are arranged beside, above and/or behind one another in relation to a longitudinal axis (L).

14. Method for mounting a first and a second galley appliance (32, 34) in an aircraft galley having the steps:
- connecting the first and the second galley appliance (32, 34) to the first connection element (30) of an interface system (10) according to one of Claims 1 to 11,
- fixing the second connection element (36) of the interface system (10) in a compartment (14) of the aircraft galley,
- introducing the galley appliances (32, 34), connected to the first connection element (30) of the interface system (10), into the compartment (14) of the aircraft galley, and
- connecting the aircraft galley connection device (52a, 52b) of the first connection element (30) of the interface system (10) to the aircraft galley connection device (58a, 58b) of the second connection element (36) of the interface system (10), in order to connect the first connection element (30) to an electrical system, a freshwater supply system and/or a wastewater disposal system of the aircraft galley, a distributor system (60a, 60b) of the first connection element (30) connecting the aircraft galley connection device (52a, 52b) of the first connection element (30) to the first and the second appliance connection device (54a, 54b, 56a, 56b) of the first connection element (30).

15. Method according to Claim 14,
**characterised in that** the first and the second galley appliance (32) are secured in their position relative to one another by means of a connecting device (11) before the galley appliances (32, 34) are introduced into the compartment (14) of the aircraft galley.

## Revendications

1. Système d'interface (10) destiné à être utilisé dans une cuisine à bord d'un avion, comprenant :
- un premier élément de raccordement (30) qui peut être relié par un premier dispositif de raccordement d'appareils (54a, 54b) à un système électrique interne, à un système interne d'alimentation en eau fraîche et/ou à un système interne d'évacuation des eaux usées d'un premier appareil de cuisine à bord (32) et qui peut être relié par un deuxième dispositif de raccordement d'appareils (56a, 56b) à un système interne électrique, à un système interne d'alimentation en eau fraîche et/ou à un système interne d'évacuation des eaux usées d'un deuxième appareil de cuisine à bord (34), et qui peut être relié par un dispositif de raccordement de cuisine à bord d'un avion (52a, 52b) à un dispositif de raccordement complémentaire de cuisine à bord d'un avion (58a, 58b) d'un deuxième élément de raccordement (36) du système d'interface (10), lequel peut être fixé dans un compartiment (14) de la cuisine à bord de l'avion, pour relier le premier élément de raccordement (30) à un système électrique, à un système d'alimentation en eau fraîche et/ou à un système d'évacuation des eaux usées de la cuisine à bord de l'avion, le premier élément de raccordement (30) comportant par ailleurs un système de répartition (60a, 60b) qui relie le dispositif de raccordement de la cuisine à bord de l'avion (52a, 52b) du premier élément de raccordement (30) au premier et au deuxième dispositif de raccordement d'appareils (54a, 54b, 56a, 56b) du premier élément de raccordement (30).

2. Système d'interface selon la revendication 1,
**caractérisé en ce que** le système de répartition (60a, 60b) du premier élément de raccordement (30) comprend :
- un répartiteur de courant (62) qui relie un raccordement électrique (66) du dispositif de raccordement de la cuisine à bord de l'avion (52a, 52b) du premier élément de raccordement (30) aux raccordements électriques (68, 70)) du premier et du deuxième dispositif de raccordement d'appareils (54a, 54b, 56a, 56b) du premier élément de raccordement (30),
- un répartiteur d'eau fraîche (72) qui relie un raccordement d'eau fraîche (76) du dispositif de raccordement de la cuisine à bord de l'avion (52a, 52b) du premier élément de raccordement (30) aux raccordements d'eau fraîche (78, 80) du premier et du deuxième dispositif de raccordement d'appareils (54a, 54b, 56a, 56b) du premier élément de raccordement (30), et/ou
- un répartiteur d'eaux usées (82) qui relie des raccordements d'eaux usées (88, 90) du premier et du deuxième dispositif de raccordement d'appareils (54a, 54b, 56a, 56b) du premier élément de raccordement (30) à un raccordement d'eaux usées (86) du dispositif de raccordement de la cuisine à bord de l'avion (52a, 52b) du premier élément de raccordement (30).

3. Système d'interface selon la revendication 1 ou 2,
**caractérisé en ce que** les raccordements d'eau fraîche (78, 80) du premier et du deuxième dispositif de raccordement d'appareils (54a, 54b, 56a, 56b) du premier élément de raccordement (30) sont disposés dans un premier segment (30a) du premier élément de raccordement (30) et que les raccordements d'eaux usées (88, 90) du premier et du deuxième dispositif de raccordement d'appareils (54a, 54b, 56a, 56b) du premier élément de raccordement (30) sont disposés dans un deuxième segment (30b) du premier élément de raccordement (30), formé distinctement du premier segment (30a) du premier élément de raccordement (30).

4. Système d'interface selon l'une des revendications 1 à 3,
**caractérisé par** un dispositif de liaison (11) conçu pour bloquer dans leur position et l'un par rapport à l'autre le premier et le deuxième appareil de cuisine à bord (32, 34).

5. Système d'interface selon la revendication 4,
**caractérisé en ce que** le dispositif de liaison (11) comprend :
- une structure porteuse (12) recevant le premier et le deuxième appareil de cuisine à bord (32, 34),
- un segment (98, 100) d'un boîtier (94) du premier élément de raccordement (30), auquel le premier et le deuxième appareil de cuisine à bord (32, 34) peuvent être fixés,
- un dispositif de maintien (136) pourvu d'une goupille de liaison (138) qui peut être reliée au premier et au deuxième appareil de cuisine à bord (32, 34), ainsi que d'une pièce d'espacement (140) portée par la goupille de liaison (138),
- une entretoise de retenue (112), à laquelle le premier et le deuxième appareil de cuisine à bord (32, 34) peuvent être fixés, l'entretoise de retenue (112) étant, à l'état monté du premier et du deuxième appareil de cuisine à bord (32, 34) dans le compartiment (14) de la cuisine à bord de l'avion, disposée dans la zone d'une face frontale (114) du premier et le deuxième appareil de cuisine à bord (32, 34) rendue accessible à un usager et s'étendant pour l'essentiel parallèlement à une plaque de fond (22) du compartiment (14), et/ou
- une plaque de fixation (172), à laquelle le premier et le deuxième appareil de cuisine à bord (32, 34) peuvent être fixés de manière telle qu'à l'état monté du premier et du deuxième appareil de cuisine à bord (32, 34) dans le compartiment (14) de la cuisine à bord de l'avion, la plaque de fixation (172) est disposée dans la zone des surfaces latérales du premier et le deuxième appareil de cuisine à bord (32, 34) tournées vers une surface latérale du compartiment.

6. Système d'interface selon l'une des revendications 1 à 5,
**caractérisé par** un système de montage (15) pourvu d'un premier dispositif de montage (16) qui peut être relié au premier et/ou au deuxième appareil de cuisine à bord (32, 34), et d'un deuxième dispositif de montage (28) complémentaire au premier dispositif de montage (16) qui peut être fixé dans le compartiment (14) de la cuisine à bord de l'avion et est conçu pour coopérer avec le premier dispositif de montage (16) pour bloquer dans leur position et par rapport au compartiment (14) le premier et le deuxième appareil de cuisine à bord (32, 34).

7. Système d'interface selon la revendication 6,
**caractérisé en ce que** le système de montage (15) comprend :
- un premier rail de guidage (18, 20) du premier dispositif de montage (16), lequel est conçu pour coopérer avec un deuxième rail de guidage (24, 24a, 24b) du deuxième dispositif de montage (28), lors du montage et à l'état monté des appareils de cuisine à bord (32, 34) dans le compartiment (14) de la cuisine à bord de l'avion,
- une saillie de guidage (42) qui s'étend du premier élément de raccordement (30) ou d'un dispositif de fixation (40) dans le compartiment (14) de la cuisine à bord de l'avion pour la fixation du deuxième élément de raccordement (36), et qui est conçue pour être logée dans une ouverture de guidage (44) complémentaire à la saillie de guidage (42), laquelle ouverture est formée dans le dispositif de fixation (40) pour la fixation du deuxième élément de raccordement (36) à l'intérieur du compartiment (14) de la cuisine à bord de l'avion ou dans le premier élément de raccordement (30), et/ou
- un premier dispositif de blocage (26) du premier dispositif de montage (16), qui peut être relié au premier et/ou au deuxième appareil de cuisine à bord (32, 34), et un deuxième dispositif de blocage (27) du deuxième dispositif de montage (28) complémentaire au premier dispositif de blocage (26) du premier dispositif de montage (16), le deuxième dispositif de blocage (27) du deuxième dispositif de montage (28) est conçu pour coopérer avec le premier dispositif de blocage (26) lors du montage des appareils de cuisine à bord (32, 34) dans le compartiment (14) de la cuisine à bord de l'avion pour bloquer les appareils de cuisine à bord (32, 34) dans leur position et dans le compartiment (14) de la cuisine à bord de l'avion.

8. Système d'interface selon la revendication 7,
**caractérisé en ce que** le premier dispositif de blocage (26) du premier dispositif de montage (16) comprend un premier élément de verrouillage (118) précontraint par ressort dans sa position de verrouillage, et que le deuxième dispositif de blocage (27) du deuxième dispositif de montage (28) comprend un deuxième élément de verrouillage (124), le premier élément de verrouillage (118) étant conçu pour être verrouillé par enclenchement avec le deuxième élément de verrouillage (124) lors du montage des appareils de cuisine à bord (32, 34) dans le compartiment (14) de la cuisine à bord de l'avion, lorsque les appareils de cuisine à bord (32, 34) se trouvent dans une position souhaitée à l'intérieur du compartiment (14) de la cuisine à bord de l'avion.

9. Système d'interface selon la revendication 7 ou 8,
**caractérisé en ce que** le premier dispositif de blocage (26) du premier dispositif de montage (16) comprend en outre un élément d'actionnement (126) pour faire se déplacer le premier élément de verrouillage (118) entre sa position de verrouillage et sa position de déverrouillage, l'élément d'actionnement (126) étant relié en particulier par un élément de liaison (134) au premier élément de verrouillage (118).

10. Système d'interface selon la revendication 9,
**caractérisé en ce que** l'élément d'actionnement (126) est déplaçable entre une position non actionnée et une position actionnée et qu'il est, dans sa position actionnée, conçu pour maintenir l'élément de verrouillage (118) dans sa position de verrouillage ou dans sa position de déverrouillage.

11. Système d'interface selon la revendication 7 ou 8,
**caractérisé en ce que** dans sa position actionnée, l'élément d'actionnement (126) s'étend, à l'état relié du premier dispositif de blocage (26) du premier dispositif de montage (16) au premier ou au deuxième appareil de cuisine à bord de l'avion (32, 34), selon un angle compris entre 30 et 90° par rapport à une face frontale du premier et/ou du deuxième appareil de cuisine à bord de l'avion (32, 34), et/ou **en ce que** dans sa position non actionnée, l'élément d'actionnement (126) s'étend pour l'essentiel parallèlement à la face frontale (114) du premier et/ou du deuxième appareil de cuisine à bord de l'avion (32, 34), à l'état relié du premier dispositif de blocage (26) du premier dispositif de montage (16) au premier ou au deuxième appareil de cuisine à bord de l'avion (32, 34).

12. Module d'appareil pour une cuisine à bord d'un avion, comprenant :
- un premier et un deuxième appareil de cuisine à bord d'un avion (32, 34) qui sont reliés au premier élément de raccordement (30) du système d'interface (10) selon l'une des revendications 1 à 11, un système électrique interne, un système interne d'alimentation en eau fraîche et/ou un système interne d'évacuation des eaux usées étant relié(s) aux dispositifs de raccordement d'appareils (54a, 54b, 56a, 56b) du premier élément de raccordement (30) du système d'interface (10).

13. Module d'appareil selon la revendication 12,
**caractérisé en ce que** le premier et le deuxième appareil de cuisine à bord de l'avion (32, 34) sont, considérés par rapport à un axe longitudinal (L), disposés l'un à côté de l'autre, l'un au-dessus de l'autre et/ou l'un derrière l'autre.

14. Procédé de montage d'un premier et d'un deuxième appareil de cuisine à bord de l'avion (32, 34) à l'intérieur d'une cuisine à bord d'un avion, comportant les étapes suivantes :
- raccordement du premier et du deuxième appareil de cuisine à bord de l'avion (32, 34) au premier élément de raccordement (30) d'un système d'interface (10) selon l'une des revendications 1 à 11,
- fixation du deuxième élément de raccordement (36) du système d'interface (10) à l'intérieur d'un compartiment (14) de la cuisine à bord de l'avion,
- installation à l'intérieur du compartiment (14) de la cuisine à bord de l'avion des appareils de cuisine à bord de l'avion (32, 34) reliés au premier élément de raccordement (30) du système d'interface (10), et
- raccordement du dispositif de raccordement de cuisine à bord de l'avion (52a, 52b) du premier élément de raccordement (30) du système d'interface (10) au dispositif de raccordement de cuisine à bord de l'avion (58a, 58b) du deuxième élément de raccordement (36) du système d'interface (10), pour relier le premier élément de raccordement (30) à un système électrique, à un système d'alimentation en eau fraîche et/ou à un système d'évacuation des eaux usées de la cuisine à bord de l'avion, un système de répartition (60a, 60b) du premier élément de raccordement (30) qui relie le dispositif de raccordement de la cuisine à bord de l'avion (52a, 52b) du premier élément de raccordement (30) au premier et au deuxième dispositif de raccordement d'appareils (54a, 54b, 56a, 56b) du premier élément de raccordement (30).

15. Procédé selon la revendication 14,
**caractérisé en ce que** le premier et le deuxième appareil de cuisine à bord de l'avion (32, 34) sont bloqués dans leur position et l'un par rapport à l'autre au moyen d'un dispositif de liaison (11), avant l'installation des appareils de cuisine à bord (32, 34) à l'intérieur du compartiment (14) de la cuisine à bord de l'avion.
